(19) **Europäisches Patentamt**
**European Patent Office**
**Office européen des brevets**

(11) **EP 1 641 946 B1**

(12) **EUROPÄISCHE PATENTSCHRIFT**

(45) Veröffentlichungstag und Bekanntmachung des Hinweises auf die Patenterteilung:
**21.02.2007 Patentblatt 2007/08**

(21) Anmeldenummer: **04730851.5**

(22) Anmeldetag: **03.05.2004**

(51) Int Cl.:
*C21C 5/00* (2006.01)       *C21C 5/35* (2006.01)
*C21C 5/28* (2006.01)       *C21C 7/068* (2006.01)

(86) Internationale Anmeldenummer:
**PCT/EP2004/004661**

(87) Internationale Veröffentlichungsnummer:
**WO 2005/001147 (06.01.2005 Gazette 2005/01)**

(54) **VERFAHREN ZUR HERSTELLUNG EINER LEGIERTEN METALLSCHMELZE**

METHOD FOR PRODUCING AN ALLOY MOLTEN METAL

PROCEDE POUR PRODUIRE UN METAL LIQUIDE D'ALLIAGE

(84) Benannte Vertragsstaaten:
**AT BE BG CH CY CZ DE DK EE ES FI FR GB GR HU IE IT LI LU MC NL PL PT RO SE SI SK TR**

(30) Priorität: **25.06.2003 AT 9762003**

(43) Veröffentlichungstag der Anmeldung:
**05.04.2006 Patentblatt 2006/14**

(73) Patentinhaber: **Voest-Alpine Industrieanlagenbau GmbH & Co**
**4031 Linz (AT)**

(72) Erfinder: **FRITZ, Ernst**
**A-4020 Linz (AT)**

(74) Vertreter: **Berg, Peter et al**
**Siemens AG**
**Postfach 22 16 34**
**80506 München (DE)**

(56) Entgegenhaltungen:
- FRITZ E ET AL: "THE K-OBM AND KMS CONVERTER - FOR THE FLEXIBLE PRODUCTION OF CARBONANS STAINLESS STEELS AND FERRO-ALLOYS" STEEL TIMES, FUEL & METALLURGICAL JOURNALS LTD. LONDON, GB, Bd. 225, Nr. 9, 1. September 1997 (1997-09-01), Seiten 364-367, XP000702945 ISSN: 0039-095X
- "K-OBM-S A SINGLE VESSEL PROCESS FOR THE PRODUCTION OF STAINLESS STEEL" STEEL TIMES, FUEL & METALLURGICAL JOURNALS LTD. LONDON, GB, Bd. 224, Nr. 8, 1. August 1996 (1996-08-01), Seiten 267-268, XP000631144 ISSN: 0039-095X
- LANGE: "Stahlherstellen durch kombiniertes Blasen" 1985, VERLAG STAHLEISEN , XP002294943 Seite 79 - Seite 83
- NN: "Steelmaking plant, Chiba Works" 1998, KAWASAKI STEEL CORPORATION , XP002294944 Seite 3 - Seite 5 Seite 8 - Seite 9 Seite 12

**Beschreibung**

Die Erfindung betrifft ein Verfahren zur Herstellung einer legierten Metallschmelze auf Eisenbasis, die vorzugsweise Cr oder Ni und Cr enthält, in mehreren aufeinander folgenden und aufeinander abgestimmten Verfahrensschritten.

Insbesondere betrifft die Erfindung ein besonders wirtschaftliches und durch das mögliche Recycling von Stäuben und Schlacken umweltfreundliches, mehrstufiges Verfahren zur Herstellung von Cr-legierten oder Cr- und Ni-legierten Metallschmelzen, insbesondere Stahlschmelzen, für die Erzeugung von ferritischen oder austenitischen Stählen verschiedenster Sorten oder anderer Metallschmelzen, wie Ferrolegierungen (FeCr, FeMn, FeNi).

Bei der Herstellung von Cr-hältigen bzw. Cr- und Ni-hältigen Metallschmelzen können als Rohstoffquelle für Cr und Ni sowohl deren Erze als auch handelsübliche Legierungsstoffe wie beispielsweise Ferrochrom, Ferronickel, Ni-Oxide, Nickelhydroxide, Stäube und Schlacken, sowie andere Abfallstoffe eingesetzt werden. Die konventionelle Erzeugung von nichtrostendem Stahl umfasst das Einschmelzen von unlegiertem und legiertem Schrott und insbesondere teuren Ferrolegierungen in einem Elektro-Lichtbogenofen und das Frischen sowie Fertiglegieren und Reduzieren in einem Konverter (US-A 5,514,331). Die Herstellungskosten von den am häufigsten produzierten rostfreien austenitischen Stahlbrammen der Güte SUS 304 bestehen zu über 75 % aus Kosten für die Legierungsstoffe Cr und Ni und liegen dzt. bei etwa 630,-- Euro/t Bramme. Cr und Ni unterliegt an den Rohstoffbörsen bei hohem Basispreis hohen Preisschwankungen und beeinflussen daher die Produktionskosten bei der Edelstahlerzeugung grundlegend.

Es ist daher naheliegend, Entwicklungen durchzuführen, mit deren Hilfe der Einsatz von sehr teuren Ferrolegierungen und auch von metallischem Nickel möglichst weit reduziert wird. Dies ist dann möglich, wenn die seperate Erzeugung von flüssigen, erstarrten, zerkleinerten Ferrolegierungen aus den Cr- und Ni-Erzen bzw. Ni-Hydroxid weitgehend vermieden wird und diese Cr- und Ni-Träger direkt in der Stahlerzeugung reduziert und somit zur kostensparenden Legierung der Schmelzen verwendet werden.

Zusätzlich zum Austausch von Ferrolegierungen durch deren Oxide und Hydroxide stellt sich bei der Erzeugung von Cr-legiertem bzw. Cr- und Ni-legiertem Flüssigstahl die Aufgabe Abfallstoffe wie Cr-hältige bzw. Cr- und Ni-hältige Stäube und/oder auch Schlacken, sowie andere Reststoffe wieder in den Stahlerzeugungsprozess rückzuführen und somit ohne Umweltproblematik und niedrigen Betriebskosten aufzuarbeiten.

Der Direkteinsatz von Cr- und Ni-Erz und der damit notwendige Reduktionsprozess des Erzes verlängert zwar den Erzeugungsprozess wesentlich und erfordert einen höheren Energieeintrag, verringert jedoch die Gesamtkosten für die Erzeugung einer legierten Metallschmelze insgesamt.

Es ist bekannt, eine chromhältige oder eine chrom- und nickelhältige Metallschmelze in mehrstufigen Verfahren in mehreren, im Produktionsablauf aufeinander folgenden, metallurgischen Gefäßen herzustellen. Diese metallurgischen Gefäße können von Einschmelzaggregaten, wie beispielsweise Elektroöfen mit Zusatzeinrichtungen für die Schmelzenbehandlung oder von Konvertergefäßen mit Aufblase- und Bodenblaseeinrichtungen oder auch von Mischanordnungen verschiedener metallurgischer Gefäße gebildet sein.

Aus der EP-A 384 397 ist bereits ein mehrstufiges Verfahren zur Herstellung einer Cr- und Ni-hältigen Metallschmelze, insbesondere eine Stahlschmelze für rostfreie Stähle, bekannt, wobei in einem ersten Verfahrensschritt Ni-Erz in einer Stahlbasisschmelze eingeschmolzen und reduziert wird und in einem zweiten Verfahrensschritt Cr-Erz in die im ersten Verfahrensschritt erzeugte Ni-hältige Metallschmelze chargiert, eingeschmolzen und reduziert wird. Der Einschmelz- und Reduktionsprozess erfolgt in einem Schmelz-Reduktionsofen, der nach Art eines Blasekonverters ausgebildet und mit Sauerstoff-Aufblasdüsen zum Einblasen von Sauerstoff für die Entkohlung und Nachverbrennung und mit Boden-Spülelementen für den Spülgaseintrag (Inertgas) in den einzelnen Verfahrensschritten ausgestattet ist. Weiters umfasst dieses Verfahren einen Entphosphorungsprozess und einen Entschwefelungsprozess, sowie einen abschließenden Entkohlungsprozess. Dieses auf billigem Erz als Rohstoffbasis arbeitende Verfahren kann den Nachteil, der sich aus dem geringen Ni-Anteil im Nickelerz und dem damit zwangsweise verbundenen großen Schlackenanfall und Energiebedarf ergibt, nur durch einen vorgelagerten Schmelzreduktionsprozess für das Nickelerz überwinden. Der hohe Erzanteil und Kohlebedarf erfordert einen zusätzlichen Entphosphorungsschritt. Ferner stellt sich das gravierende Problem hoher Chromoxidation und damit Chromverschlackung während des Entkohlungsprozesses der Cr- und Ni-hältigen Metallschmelze, da die Badbewegung durch das Unterbadblasen von normalen Inertgasmengen in die Schmelze ohne Sauerstoff zu gering ist, um niedrige C-Gehalte bei niedriger Chromverschlackung zu erreichen. Bei extrem hohen Inertgasmengen zur Erzeugung der erforderlichen Badbewegung werden viele Metall- und Schlackenspritzer aus dem Konverter ausgetragen, da sich das Inertgas nicht wie Sauerstoff in der Schmelze löst, sondern bei der Schmelzentemperatur lediglich ausdehnt und, in einem engen Bereich konzentriert, über den Einleitungselementen aus der Schmelze und Schlacke in den Gasraum des Konverters und in den Konverterkamin, unter Mitnahme von Metall- und Schlackenpartikel, austritt.

Die großen Schlackenmengen, die beim Aufschmelzen und Reduzieren von Ni-Erz mit nur 1,5 bis 2,5% Ni anfallen, erfordern zusätzlich ein häufiges Abschlacken der Schmelze und somit Materialverluste und vor allem Blasstillstände, welche eine wesentliche Produktionsverminderung bewirken.

Aus der AT-B 403 293 ist ein zweistufiges Verfahren zur Herstellung einer legierten Metallschmelze, vorzugsweise für die Herstellung von rostfreien Stählen, in zwei Lichtbogenöfen bekannt, wobei in einem ersten Herstellungsschritt in einem ersten Lichtbogenofen Eisenträger, insbesondere Schrott, unter Zufuhr von elektrischer Energie eingeschmolzen und eine Entphosphorung durchgeführt wird und in einem zweiten Herstellungsschritt nach dem Umfüllen der Zwischenschmelze vom ersten Lichtbogenofen in einen zweiten Lichtbogenofen in diesem die Legierungseinstellung erfolgt. Hierbei wird vorzugsweise durch eine Hohlelektrode, kleine Mengen an Chromerz, Nickeloxid, gegebenenfalls vermischt mit einem Reduktionsmittel und Kohle, in die Metallschmelze eingebracht. Diesem Verfahren stehen jedoch vorwiegend ökonomische Gründe entgegen, da der angestrebten Ziellegierung entsprechender legierter Schrott zumeist nicht in ausreichender Menge und Kontinuität zur Verfügung steht, die zu reduzierenden Chromerz- und Nickeloxidmengen, sowie die Produktivität niedrig sind, und elektrische Energie zumeist teuer ist. Außerdem ist auch hier die Badbewegung und somit das Mischen von C-hältiger Schmelze und Schlacke nicht intensiv genug, um bei niedrigen C-Gehalten in der Schmelze eine niedrige Cr-Oxidation zu ermöglichen.

Diese bekannten Verfahren zur Herstellung einer legierter Metallschmelze berücksichtigen zwar metallurgische Bedingungen für die Prozessführung, lassen jedoch Randbedingungen außer acht, die sich aus dem kontinuierlichen Produktionsablauf von der Stahlerzeugung bis zum stranggegossenem Zwischenprodukt, sowie aus Umweltschutzgründen durch den Anfall von chromoxidhaltigen Staub und Schlacke, sowie anderen Abfallstoffen ergeben. Eine zeitliche Abstimmung zwischen der Taktfrequenz bei der Herstellung einer Charge einer vergießbereiten legierten Metallschmelze und der Taktfrequenz beim Sequenzgießen auf einer Stranggießanlage und damit letztlich ein auf den zeitlichen und mengenmäßigen Versorgungsbedarf der Stranggießanlage abgestimmtes Herstellverfahren der Stahlschmelze bleibt unberücksichtigt.

Der weltweite Bedarf an rostfreiem Stahl steigt enorm an und aus wirtschaftlichen Gründen und wegen der Nachfrage werden die Produktionseinheiten zunehmend größer, sodass eine hohe Produktivität mit bestens abgestimmten Taktzeiten, der Wirtschaftlichkeit und der Lösung der Umweltproblematik große Bedeutung zukommt.

Aus der EP-B 877 823 ist ein zweiadriges Verfahren zur Erzeugung nichtrostender Stähle bekannt, mit dem auf eine vorgegebene Chargenzeit von 40 bis 60 min an einer Stranggießanlage dadurch Rechnung getragen wird, dass nach jeweils 80 bis 120 min aus jeweils einem Produktionsgefäß eine Charge vergießfertige Stahlschmelze bereitgestellt wird. Die Herstellung der Stahlschmelze erfolgt hierbei in zwei metallurgischen Gefäßen, die nebeneinander positioniert sind, gegebenenfalls identische Stahlqualitäten erzeugen und denen Elektroden für die Zufuhr elektrischer Energie und Blaslanzen für die Sauerstoffzufuhr in Schwenkstationen so zugeordnet sind, dass beide metallurgische Gefäße damit wechselweise bedient werden können. Zur Schrotteinschmelzung und zum Einschmelzen sonstiger Eisenträger wird das metallurgische Gefäß als Lichtbogenofen verwendet. Nach Erreichen einer Schmelzentemperatur von 1500 bis 1600°C werden die Elektroden ausgeschwenkt und Blaslanzen eingeschwenkt und das metallurgische Gefäß als Blaskonverter weiter betrieben. Der Wechsel in der Betriebsweise erfolgt im zeitlichen Gleichlauf mit den Gießsequenzen an der Stranggießanlage. Eine verfahrenstechnisch wirtschaftliche Lösung zum Einbringen und Reduzieren von Chromoxid und/oder Nickeloxid bzw. Nickelhydroxid bei entsprechender Badbewegung und geringer Cr-Verschlackung wird hier jedoch nicht angesprochen. Außerdem ist auch hier die Mischung von Schmelze und Schlacke nicht optimal.

Aufgabe der vorliegenden Erfindung ist es daher, die Nachteile des bekannten Standes der Technik zu vermeiden und ein Verfahren zur Herstellung einer legierten Metallschmelze vorzuschlagen, für welche einerseits die Produktionskosten bei hoher Qualität der Metallschmelze minimiert werden und andererseits die Produktionszeit für eine Charge auf die Taktzeiten einer nachgeordneten Stranggießanlage abgestimmt ist. Ein weiteres Ziel der Erfindung liegt darin, dass Abfallstoffe, wie Cr-haltige, bzw. Cr- und Nihaltige Stäube und Schlacken umweltfreundlich in den Erzeugungsprozess rückgeführt und wertvolles Chrom. bzw. Chrom und Nickel aus diesen Abfallstoffen rückgewonnen werden, ohne dass die Produktivität des Verfahrens reduziert wird.

Ein weiterer Vorteil der Erfindung besteht darin, dass eine hohe Produktivität aus Kostengründen mit möglichst kleinen Chargengewichten (t Metallschmelze / Verfahrensschritt) ermöglicht wird.

Diese Aufgabe wird bei einem Verfahren in mehreren aufeinander folgenden und aufeinander abgestimmten Verfahrensschritten erfindungsgemäß dadurch gelöst, dass

- in einem ersten Verfahrensschritt in eine Basisschmelze Legierungsmittelträger eingebracht werden und unter zusätzlicher Zuführung eines Reduktionsmittels, rezirkulierter Schlacke und/oder von Schlackenbildner und eines Energieträgers unter der Einwirkung von Auf- und Unterbadblasen mit mindestens einem Sauerstoffträger die Legierungsmittelträger aufgeschmolzen und weitgehend reduziert und eine erste vorlegierte Schmelze erzeugt wird,
- in einem zweiten Verfahrensschritt in die erste vorlegierte Schmelze, Legierungsmittelträger, vorzugsweise ein Cr-Träger, und gegebenenfalls eine Basisschmelze eingebracht werden und unter zusätzlicher Zuführung eines Reduktionsmittels, eines Schlackenbildners und eines fossilen Energieträgers unter der Einwirkung von Auf- und Unterbadblasen mit einem Sauerstoffträger der Legierungsmittelträger, vorzugsweise der Cr-Träger aufgeschmolzen, weitgehend reduziert und eine zweite vorlegierte Schmelze erzeugt wird und
- in einem dritten Verfahrensschritt der zweiten vorlegierten Schmelze Legierungsmittel, insbesondere Ferrolegierungen, und gegebenenfalls eine Basisschmelze zugesetzt werden, dass Schlackenbildner zugesetzt werden und unter der Einwirkung von Auf- und Unterbadblasen mit einem Sauerstoffträger ein Entkohlungsprozess durchgeführt und eine legierte Schmelze mit vorbestimmter chemischer Analyse und Temperatur eingestellt wird.

Der Einsatz von Legierungsmittelträger, Reduktionsmittel, Schlackenbildner, Energieträger, Sauerstoffträger, Cr-Träger, Metallträger ist stets so zu verstehen, dass diese eingesetzten Träger bzw. Mittel von mindestens einem hierfür definitionsgemäß vorgesehenen Stoffe gebildet ist. Sie sind in beliebigen Verhältnissen mischbar und können durch für den jeweiligen Verwendungszweck geeignete, in dieser Anmeldung nicht explizit angeführten Träger oder Mittel ergänzt oder ersetzt werden.

Die eingestellte chemische Analyse und Temperatur der legierten Schmelze kann optimal auf eine Weiterbehandlung der Schmelze in einer VOD-Anlage abgestimmt sein oder auch schon jene chemische Analyse und Temperatur aufweisen, welche dem auf einer Stranggießanlage fertig vergießfähigen Flüssigstahl entspricht. Natürlich kann eine derartige Schmelze auch vor dem Vergießen auf einer Stranggießanlage in einem Pfannenbehandlungsstand auf die gewünschte chemische Analyse und Temperatur eingestellt werden.

Jeder der erfindungsgemäß vorgeschlagenen drei Verfahrensschritte findet in einem separaten Reaktionsgefäß statt, wobei die erste und zweite vorlegierte Schmelze nach deren Fertigstellung in das nachfolgende Reaktionsgefäß umgeleert wird. Die mengenmäßige Chargierung von Rohstoffen (z.B. Basisschmelze, Legierungsmittelträger, wie Cr- und Ni-Träger) für die Erzeugung der vorlegierten und legierten Schmelze in den einzelnen Verfahrensschritten erfolgt in Abstimmung auf eine weitgehend gleiche Produktionszeit in den einzelnen Verfahrensschritten und in Abstimmung auf die Gießzeit beim Sequenzgießen. Die mengenmäßige Chargierung von Reduktionsmittel, Schlackenbildner und Energieträgern erfolgt in Abstimmung auf die metallurgischen Erzeugungsbedingungen der vorlegierten und legierten Schmelze.

Im ersten Verfahrensschritt wird als Basisschmelze eine entschwefelte und weitgehend entphosphorte Metallschmelze auf Eisenbasis in das Reaktionsgefäß eingebracht und ein Metallbad gebildet, welches günstige Ausgangsbedingungen für eine maximale Energieübertragung an die Schmelze und Einsatzstoffe mit Hilfe der mit sauerstoffhältigem Gasen blasenden Unterbaddüsen und der Aufblaslanze unter Zugabe fossiler Energie (meist Koks bzw. Koks und Kohle oder nur Kohle) ergibt.

Als Legierungsmittelträger kommen im ersten Verfahrensschritt Chromerz, Cr-hältiger Staub, Schlacke (bevorzugt aus dem dritten Verfahrensschritt), legierter Schrott und Zunder, sowie oxidische und/oder hydroxidische Legierungsmittel, Nickelerz, Nickeloxid, Nickelsinter, Nickelhydroxid, Cr- und Ni-hältiger sowie anderer Abfall, wodurch die Wirtschaftlichkeit des vorzugsweise ersten Verfahrensschrittes erhöht wird, weiters Flugasche aus Kohlekraftwerken, Aschen von Müllverbrennungsanlagen, Shredderabfall, getrockneter Beizschlamm, etc., in Frage.

Im ersten und zweiten Verfahrensschritt wird Cr in Form von oxidischen Cr-Trägern, insbesondere preisgünstigem Chromerz mit z.B. 45 Gew.-% $Cr_2O_3$ chargiert. Zusätzlich oder alternativ können auch Cr-hältige Rücklaufstoffe, wie Stäube bzw. Schlacken in fester, flüssiger oder heißer Form, sowie sonstige Rest- und Abfallstoffe mit einem Chromanteil eingesetzt werden.

Die Zugabe von Ni bei der Herstellung von mit Cr und Ni legierten Stählen erfolgt überwiegend erst in der dritten Verfahrensstufe, da hierdurch Verluste durch Staub und Metallverluste beim Blasen und Umfüllen der Schmelzen gering gehalten werden können.

Besonders im ersten und zweiten Verfahrensschritt werden Kohlenstoffträger als Reduktionsmittel und als Energieträger eingebracht, die aus einem oder mehreren der nachfolgenden Stoffe gebildet sein können: Anthrazit, Steinkohle, sonstige Kohlen, Koks, Braunkohlenkoks, Petrolkoks, Graphit, jeweils in stückiger oder puverisierter oder gepresster Form; flüssige oder gasförmige Kohlenwasserstoffe, wie Rohöl, Heizöl, heißer Rohteer, Raffinerierückstände, Schweröl, Erdgas, Propan, Butan, etc.; C-haltige Abfallstoffe z.B. von der FeNi-Erzeugung, Biomasse und Kunststoffe, beispielsweise in Form von Presslingen einer organischer Leichtfraktion.

Als Energieträger kommen im ersten Verfahrensschritt sowohl fossile Energieträger als auch elektrische Energie in Frage. Insofern kann ein für die Durchführung des ersten Verfahrensschrittes vorgesehenes Reaktionsgefäß sowohl von einem Konverter als auch von einem Lichtbogenofen mit Blasvorrichtungen gebildet sein. Im zweiten Verfahrensschritt werden vorzugsweise ausschließlich fossile Energieträger für den notwendigen Energieeintrag herangezogen und der dritte Verfahrensschritt wird bevorzugt autotherm, bzw. mit nur geringem Energieeinbringen durchgeführt. Fossile Energieträger können den Stäuben zur besseren Fluidisierung zugesetzt werden.

Als Sauerstoffträger werden $O_2$ oder Heißwind, gegebenenfalls auch beide, eingesetzt.

Als Schlackenbildner werden vorwiegend gebrannter Kalk, Dolomit, Flussspat, Quarzsand, Gießereisand, Mergel, Altglas, Aschen, Müll, Rückstände der Industrie, Bauxit etc. eingesetzt. Feinkörnige Schlackenbildner können unter Anderem zur besseren Fluidisierung auch den Stäuben bzw. fossilen Brennstoffen zugesetzt werden. Das jeweilige Trägergas muss hierbei den metallurgischen und sicherheitstechnischen Anforderungen entsprechen.

Solche Schlackenbildner dienen zur Schlackenbildung und können aber auch zur Modifikation der Schlacke dienen, damit diese für andere Zwecke (z.B. in der Zementindustrie, im Straßenbau etc.) optimal eingesetzt werden können.

Je nach Verfügbarkeit wird in einem oder mehreren der Verfahrensschritte Schrott, insbesondere mit Cr, bzw. Cr und Ni legierter Stahlschrott, und gegebenenfalls sonstige Metallträger in vorbestimmten Mengen zugegeben. Es besteht eine Wechselbeziehung zwischen der chargierten Schrottmenge und der chargierten Menge von Chromerz und Reduktionsmittel, wobei hier stets ein mengenmäßiger Ausgleich zwischen den chargierten Mengen in den einzelnen Verfahrensstufen vorgenommen wird, um annähernd gleiche Produktionszeiten in den einzelnen Verfahrensstufen sicherzustellen.

Die sonstigen Metallträger können beispielsweise aus Stahlspänen, festem Roheisen, aber auch Ferrolegierungen und reinem Ni bestehen.

Um den Energieeintrag im Erzeugungsprozess möglichst effizient durchzuführen, ist es zweckmäßig, wenn zumindest im ersten und im zweiten Verfahrensschritt eine CO + $H_2$-Nachverbrennung durch Aufblasen von Sauerstoff oder eines $O_2$-hältigen Gases (z.B. mit Sauerstoff angereicherter Heißwind) stattfindet und im dritten Verfahrensschritt eine derartige CO + $H_2$-Nachverbrennung vorzugsweise ausschließlich mit Sauerstoff erfolgt. Im ersten und zweiten Verfahrensschritt werden unter Einbringung von Kohlenstoff- und Sauerstoffträgern große Mengen von Staub, Schlacke und Cr-Erz, sowie Schrott aufgeschmolzen und das Cr-Erz einem Reduktionsprozess unterzogen. Hierbei werden in großem Umfang unvollständig verbrannte CO + $H_2$ -hältige Abgase erzeugt. Diese werden in diesem Verfahrenschritt vorzugsweise durch Einblasen eines Heißwindstrahles oberhalb der Schlackenschicht einer Nachverbrennung unterzogen. Der Energietransfer in die Schlacke und in die Metallschmelze wird durch eine intensive Badbewegung wesentlich verstärkt, wobei diese Badbewegung durch gleichzeitiges Unterbadblasen, vorzugsweise Bodenblasen, erreicht wird, welches vorzugsweise unter Einsatz von dauerhaften mit gassförmigen Kohlenwasserstoffen geschützte Düsen (KMS-S-Düsen) erfolgt. Unter Einsatz von Heißluftdüsen für das Aufblasen und den speziellen Unterbad-/Bodendüsen ist eine Nachverbrennungsrate von etwa 60% und eine Wärmeübertragung an die Schmelze und Schlacke von annähernd 90% erreichbar. Durch den Einsatz von z.B. Sauerstoff für die Nachverbrennung besteht die Möglichkeit ein als Brenngas einsetzbares Abgas zu erzeugen, welches nach einer Staubabscheidung einem Gasspeicher zugeführt wird. Ein als Brenngas sinnvoll weiterverwendbares Abgas und damit eine entsprechend hohe Abgasgutschrift ergibt sich jedoch nur, wenn die Nachverbrennungsrate, entsprechend der Formel $\dfrac{(CO_2 + H_2O).100}{CO + CO_2 + H_2 + H_2O}$ , deutlich unter 60%

bleibt.

Zur Durchführung der CO + $H_2$-Nachverbrennung werden, sofern das Abgas weiter verwendet werden soll, Sauerstoff-Nachverbrennungslanzen oder zumindest eine Lanze eingesetzt, die oberhalb des Schlackenbades vertikal oder schräg zum Schlackenbad gerichtete Sauerstoffstrahlen in die aufsteigenden Gase kontinuierlich oder pulsierend blasen bzw. bläst, diese ansaugen und teilweise zu $CO_2$ und $H_2O$ nachverbrennen. Die Nachverbrennungsrate liegt dann zwischen 10% und etwa 35%. Beim kontinuierlichen oder pulsierenden Heißwindaufblasen liegt die Nachverbrennungsrate zweckmäßig zwischen 30% und 70%.

Für die Wirtschaftlichkeit des Verfahrens ist jedoch nicht nur die Nachverbrennungsrate sondern auch die Wärmeübertragung an die Schmelze besonders wichtig. Auf Grund des Unterbadblasens mit $O_2$, welches eine intensive Badbewegung mit CO als "Motor" ermöglicht, werden bis zu 90% der durch die Nachverbrennung frei werdenden Energie an die Schmelze und Schlacke übertragen. Dies gilt sowohl für die Nachverbrennung durch Aufblasen mit $O_2$, wie auch für das Heißwindaufblasen mit der höheren Nachverbrennungsrate.

Als zweckmäßig hat sich bei diesem erfindungsgemäßen Stahlerzeugungsverfahren auch der Einsatz einer Multifunktionslanze als Aufblaslanze erwiesen, wie sie in der WO 00/12767 beschrieben ist. Diese Multifunktionslanze ermöglicht durch ihren mehrfachen Ringkanalaufbau den Einsatz in mehreren Verfahrensschritten des Erzeugungsprozesses.

In der dritten Verfahrensstufe, die vorzugsweise in einem kombiniert blasenden Entkohlungskonverter (K-OBM-S-Konverter) durchgeführt wird, erfolgt im Wesentlichen die Endlegierung und eine Entkohlung der Schmelze in einem weitgehend autothermen Prozess.

Wenn preiswerte Nickelträger, wie beispielsweise Nickelhydroxid mit etwa 40% Ni-Anteil, Nickelsinter, Nickeloxide, etc., verfügbar sind, so werden diese bevorzugt in der dritten Verfahrensstufe unter Bad eingeblasen oder in stückiger Form (Pellets, Briketts, etc) bei noch hohen Kohlenstoffgehalten der Schmelze von oben durch Schwerkraft oder durch Aufblasen zugegeben. Dadurch wird die Produktivität nicht vermindert und die Nickelverluste durch Staubaustrag, Spritzer, Metalltröpfchen in der Schlacke und Ausleerverluste werden auf ein Minimum begrenzt. Ein Einbringen der vollen Nickelmenge in der ersten und zweiten Verfahrensstufe würde zusätzliche, unvermeidbare Nickelverlust nach sich ziehen.

Der dritte Verfahrensschritt benötigt einen wesentlich geringeren Zeitaufwand als der erste und der zweite Verfahrensschritt, wenn ein Maximum an Cr-Oxid, Schlacke, Staub und Schrott verarbeitet wird. Damit die Produktionszeit im dritten Verfahrensschritt etwa der Produktionszeit im ersten und zweiten Verfahrensschritt entspricht und zur Erniedrigung der Investitionskosten, kann die im zweiten Verfahrensschritt erzeugte zweite vorlegierte Schmelze in mindestens zwei Teilmengen aufgeteilt und jede Teilmenge in jeweils einem dritten Verfahrensschritt mit einer Basisschmelze ergänzt werden. Es werden Legierungsmittel zugesetzt, die je nach erzeugter Stahlqualität Cr oder Cr und Ni enthalten. Es werden weiters Schlackenbildner zugesetzt und unter der Einwirkung von Auf- und Unterbadblasen mit einem Sauerstoffträger ein Entkohlungsprozess durchgeführt und eine legierte Schmelze mit vorbestimmter chemische Analyse und Temperatur eingestellt.

Für den verfahrensgemäßen Ablauf des Einschmelzvorganges, des Reduktionsprozesses, des Energieeintrages und des Entkohlungsvorganges wird in allen Verfahrensstufen ein Aufblasvorgang mit einem Sauerstoffträger durchgeführt. Hierbei erfolgt das Aufblasen im ersten und zweiten Verfahrensschritt allein mit Sauerstoff, oder einem Gemisch von Sauerstoff und Stickstoff in einem besonderen Mischungsverhältnis, oder mit Heißwind, oder einem mit Sauerstoff angereichertem Heißwind. Im dritten Verfahrensschritt erfolgt das Aufblasen mit Sauerstoff oder einem Gemisch aus Sauerstoff und einem Inertgas, welches auch Verbrennungsgase, wie $CO_2$ und $H_2O$ enthalten kann.

Bei der Erzeugung einer Metallschmelze mit hohem Cr-Gehalt und/oder hohem Ni- oder Mn-Gehalt, wie sie bei Ferrolegierungen auftreten (Cr-Gehalt > 30 Gew.-%, Ni-Gehalt > 13 Gew.-%, Mn-Gehalt > 30 Gew.-%), ist es vorteilhaft, wenn im dritten Verfahrensschritt zumindest teilweise mit Heißwind aufgeblasen wird. Im ersten und zweiten Verfahrensschritt erfolgt das Aufblasen bei der Herstellung von Ferrolegierungen bevorzugt mit Heißwind oder mit Sauerstoff angereichertem Heißwind.

Wenn das Abgas weiter verwertet werden soll, kommt als Blasmedium für das Aufblasen bei allen Verfahrensschritten bevorzugt Sauerstoff in Frage, der über eine wassergekühlte Blaselanze aufgebracht wird. Zur Realisierung einer wesentlichen Reduktion, vorzugsweise mehr als Halbierung, des Kohleverbrauches sollte zumindest im ersten oder im ersten und zweiten Verfahrensschritt bevorzugt Heißwind oder mit Sauerstoff angereicherter Heißwind verwendet werden.

Dies ist auch dann besonders wichtig, wenn nach einer Variante im ersten Verfahrensschritt ausnahmsweise z.B. Nickelerz oder nickelhaltige Abfallstoffe in größerer Menge zum Einsatz kommen und somit große Schlackenmengen erschmolzen werden, wodurch ein hoher Energiebedarf besteht. Auch eine einem derartigen ersten Verfahrensschritt (ohne Chromlegierung bzw. Chromerzeduktion) nachgeschaltete Entphosphorung der Schmelze bedarf einer zusätzlichen Energiezufuhr bei der Erzeugung der ersten vorlegierten Schmelze, da diese Entphosphorung einen erheblichen Temperaturverlust der Schmelze bewirkt.

Wenn das Abgas aus dem zweiten Verfahrensschritt nicht zu einer entsprechenden Abgasgutschrift führen soll oder auch aus metallurgischen Gründen, kann mit Heißwind oder mit Sauerstoff angereichertem Heißwind aufgeblasen werden.

Im dritten Verfahrensschritt wird bevorzugt mit Sauerstoff und bei niedrigen C-Gehalten in der Schmelze mit Sauerstoff und Inertgas aufgeblasen, um die Chromverschlackung trotz der guten intensiven Badbewegung durch das Einblasen von Sauerstoff bzw. einem Gemisch von Sauerstoff und Inertgas weiter zu erniedrigen.

Eine Erhöhung und Stabilisierung der Nachverbrennungsrate wird erreicht, wenn das Aufblasen im ersten und/ oder zweiten Verfahrensschritt mit pulsierendem $O_2$, mit $O_2$ und Inertgas oder Heißwind oder mit $O_2$ angereichertem Heißwind durchgeführt wird.

Die innige Vermischung von Schlacke und kohlenstoffhältiger Schmelze wird hierbei im dritten Verfahrensschritt bei abnehmenden C-Gehalt der Schmelze durch das Zumischen von Stickstoff zum Sauerstoff verbessert und die Chromverschlackung im Vergleich zur Entkohlung zurückgedrängt. Dies kann jedoch auch mit Hilfe einer Multifunktionslanze erreicht werden. Der Hauptsauerstoffstrahl aus der(n) Düse(n) wird dabei von einem in einem Brenner erzeugten heißen, in der Sauerstoff-Blaseeinrichtung schnell strömenden Gas umgeben. Ein derartiger Gasstrahl erhält seine hohe Strömungsgeschwindigkeit über eine, im Vergleich zum normalen Laval-$O_2$-Strahl, größere Distanz und die Schlacke wird intensiver mit der Schmelze vermischt. Dies führt ebenfalls zu noch niedriger Cr-Verschlackung im Vergleich zum Aufblasen mit einem normalen Laval-$O_2$-Strahl (z.B. mit Mach 2,2).

Somit kommen für das Aufblasen insgesamt eine Reihe von Varianten in Frage, die von verschiedensten Randbedingungen abhängen, wie der Verfügbarkeit bei bestehenden Produktionsanlagen, der Größe der Entstaubungsanlagen, der Abgasverwertung und von Einsatzstoffen. Mögliche Varianten sind in der nachstehenden Tabelle I aufgelistet und können für den Einzelfall im Rahmen des Schutzumfanges des erfindungsgemäßen Verfahrens modifiziert werden. Für das Aufblasen sind die aufgelisteten Verfahrensvarianten zielführend, wobei in der Tabelle jeweils fett gedruckte Ringe "O" bei dem jeweiligen Verfahrensschritt die Basisvariante repräsentieren.

Wenn mit Sauerstoff aufgeblasen wird, liegt die spezifische Blasrate im ersten und zweiten Verfahrensschritt zwischen 25% und 90% der gesamten Blasrate, bevorzugt bei etwa 80% der gesamten Blasrate, welche zwischen 2,0 und 6,0 Nm$^3$/t.min, bevorzugt bei etwa 3,8 Nm$^3$/t.min eingestellt wird.

Wird statt mit Sauerstoff mit Heißwind aufgeblasen, so ist die Blasrate um etwa 1,5 bis 5 mal höher als beim Sauerstoffaufblasen.

**Tabelle I: Aufblasen: Blasart und Medien in den Verfahrensschritten 1 bis 3**

| Blasart | Medien | Verfahrenschritt 1 | Verfahrensschritt 2 | Verfahrensschritt 3 |
|---|---|---|---|---|
| Aufblasen | $O_2$ | (o) | O | O |
| | $O_2$ +Inertgas | (o) | (o) | O |
| | Heißwind | O | (O) ***) | ((o)) |
| | Heißwind+O2 | O | (O) ***) | ((o)) |
| | $O_2$ +Staub****) | (o) | (o) | ((o)) |
| | C-Träger **) | (oo)) | ((o)) | ((o)) |
| | Kalkstaub | ((oo)) | ((o)) | ((o)) |
| | Cr-Erz **) | O | (o) | ((o)) |
| | Cr-Erz + Grobstaub *) | (o) | O | ((o)) |
| | Cr-Erz + Ni-Träger | (o) | (o) | ((o)) |

O  Basisvariante
(o)  Option
((o))  eher selten
*)  z.B. durch seperate Lanze (blasen oder Schwerkraftförderung)
**)  C-Träger oder in einer Mischung mit Cr-Erz, Ni-Träger, Staub
***)  wird Basisvariante, wenn das Abgas nicht verwertbar ist
****)  wenn der Staub keine metallischen Teilchen enthält, ansonsten wird der Staub mit Inertgas aufgeblasen

Das Unterbadblasen umfasst als besonders bevorzugte Ausführungsform das Bodenblasen durch Bodendüsen im Boden des jeweils eingesetzten Reaktionsgefäßes.

Zur Abstimmung des Unterbadblasens auf die wechselnden Anforderungen bei der Herstellung der Metallschmelzen in den einzelnen Verfahrensstufen, ist es vorteilhaft, wenn das Unterbadblasen im ersten Verfahrensschritt und gegebenenfalls auch im zweiten Verfahrensschritt eine oder mehrere der folgenden Maßnahmen umfasst:

a) ein Unterbadblasen zur CO-Bildung, Wärmeübertragung bei der Nachverbrennung, Energieeinleitung und insbesondere Badbewegung, Mischung von Schmelze und Schlacke, sowie gegebenenfalls das Zerschneiden von Schrott und Metallträger mit

- $O_2$ oder einem Gemisch aus $O_2$ und einem Inertgas, wie vorzugsweise $N_2$, oder
- $O_2$ und ein Gemisch aus $O_2$ und einem Inertgas in aufeinander folgenden Schritten oder
- einem Gemisch aus Sauerstoff und Wasserdampf oder
- einem Gemisch aus Sauerstoff und $CO_2$;

b) die Zufuhr eines Energieträgers und eines Reduktionsmittels durch Unterbaddüsen;
c) das Einblasen von Stäuben, wie Hüttenkreislaufstoffen, Konverter- und Elektroofenstäube, Stäube von der Erzeugung von Ferrolegierungen, Asche, feinkörnige Ferrolegierungen oder Al;
d) das Einblasen von Fe-, Cr- und Ni-hältige Stäube zur Entsorgung und als Legierungsmittelträger;
e) das Einblasen von Schlackenbildnern, wie Kalk, $SiO_2$, Flussspat, Bauxit, Sand, jeweils mit Sauerstoff als Trägergas, solange die Cr-Gehalte der Schmelze etwa unter 10 Gew.-% liegen oder mit Inertgas;
f) das Einblasen von mindestens einem der Stoffe Cr-Erz, Mn-Erz, Ni-Erz, Ni-Oxide, Nickelhydroxid, Stäuben, Aschen, Zunder, Schleifstäube, Sand, kontaminierter Bauschutt, Abfall aus Haushalt oder Industrie, Abfallstoffen als Legierungsmittelträger und/oder Schlackenbildner.

Beim Einblasen der Legierungsmittelträger (Cr-Erz, Mn-Erz, Ni-Erz, Ni-Oxide, Ni-Sinter, Nickelhydroxid) ist auf die örtliche Temperaturerniedrigung der Schmelze vor den Düsen zu berücksichtigen.

Die Zufuhr eines oder mehrerer Energieträger für das Aufschmelzen der Einsatzstoffe, die Überhitzung der Schmelze und die Zufuhr eines Reduktionsmittels für den Ablauf der Oxidreduktionen kann zusätzlich oder alternativ zum Bodenblasen in stückiger Form von oben in das Reaktionsgefäß erfolgen. Gleichermaßen kann auch die Zufuhr von Schlackenbildnern und Legierungsstoffen zusätzlich oder alternativ zum Unterbadblasen von oben auf bzw. in die Schmelze im Reaktionsgefäß erfolgen. Hierbei erfolgt die Einbringung in staubförmiger oder feinkörniger Form mit Blaselanzen oder in stückiger Form durch Chargierung bzw. durch dosierte Zugabe aus einem Hochbunker.

Weiters können Stäube und sonstige feinkörnige Stoffe, wie Hüttenkreislaufstoffe, Konverter- und Elektroofenstäube, Stäube aus der Erzeugung von Ferrolegierungen, Asche, feinkörnige Ferrolegierungen oder AL, sowie FE-, Cr- und Ni-hältige Stäube stückig gemacht werden und in dieser stückigen Form der Schmelze oder der Schlacke zugeführt werden. Die Stückigmachung erfolgt hierbei vorzugsweise durch Brikettieren oder Pelletieren.

Die spezifischen Unterbadblasraten liegen zwischen 0,25 und etwa 3,5 $Nm^3$/t.min. Wenn das Unterbadblasen nur mit Sauerstoff erfolgt, so liegt die bevorzugte Bodenblasrate bei etwa 0,4 bis 1,5 $Nm^3$/t.min.

Während des zweiten Verfahrensschrittes werden durch das Unterbadblasen im Wesentlichen eine ausreichende CO-Bildung, eine Energieeinleitung und insbesondere Badbewegung und damit auch eine optimale Übertragung der bei der Nachverbrennung freiwerdenden Energie an die Schmelze, sowie eine Mischung von Schmelze und Schlacke ermöglicht. Insgesamt wird hierdurch in Verbindung mit einer hohen Nachverbrennungsrate ein möglichst hoher Energieeintrag in das Metallbad und eine beträchtliche Einsparung an Primärenergie erzielt. Hierzu wird durch Unterbaddüsen

- $O_2$ oder ein Gemisch aus $O_2$ und einem Inertgas, wie vorzugsweise $N_2$, oder
- $O_2$ und ein Gemisch aus $O_2$ und einem Inertgas in aufeinanderfolgenden Schritten und Mischungsverhältnissen, oder
- ein Gemisch aus $O_2$ und Wasserdampf, oder
- ein Gemisch aus $O_2$ und $CO_2$

eingebracht. Weiters ist zusätzlich oder als Alternative für den Erzeugungsprozess die Zufuhr eines flüssigen oder gasförmigen Reduktionsmittels durch die Unterbaddüsen zweckmäßig. Weiters ist es zusätzlich oder als Alternative für den Erzeugungsprozess zweckmäßig, dass das Unterbadblasen wie im ersten Verfahrensschritt durchgeführt wird.

Im dritten Verfahrensschritt erfolgt das Unterbadblasen zur CO-Bildung, CO-Partialdruckerniedrigung, Wärmeübertragung bei der Nachverbrennung, Badbewegung und Entkohlung mit $O_2$ und einem Gemisch aus $O_2$ und einem Inertgas in aufeinander folgenden Schritten mit gegebenenfalls wechselnden Mischungsverhältnissen. Das Mischungsverhältnis von $O_2$ und einem Inertgas wird hierbei in Abhängigkeit vom C-Gehalt der Schmelze und eventuell auch der Temperatur eingestellt.

Im dritten Verfahrensschritt werden feinkörnige Ni-Träger, direkt oder gemischt mit einem Reduktionsmittel, mit einem Trägergas, welches vorzugsweise ein Inertgas oder ein Gemisch aus Inertgas und einem geringen Anteil an Sauerstoff umfasst, durch Unterbadblasen bei einem C-Gehalt in der Schmelze von mehr als 1,0 Gew.-% C in die Schmelze eingebracht. Die Feststoffe werden bevorzugt durch die gegen Verschleiß geschützten Zentralrohre der Unterbaddüsen eingeblasen, wenn sie nicht von oben zugegeben werden. Als Ni-Träger kommen beispielsweise Nikkeloxid, Nickelsinter, Nickelhydroxid, Abfallstoffe aus der FeNi-Produktion, etc., in Frage. Ni-Träger können auch in stückiger Form, einschließlich geformter Pellets und Briketts, auf das Metallbad chargiert oder mit speziell ausgebildeten Blaselanzen in die Schlackenschicht oder die Schmelze geblasen werden.

Um diesem vielfältigen Anforderungsprofil zu entsprechen, werden Unterbaddüsen eingesetzt, die zumindest eine Zentraldüse (Rohr) und einen Ringspalt oder mehrere konzentrische Ringkanäle für die Durchleitung der Einsatzstoffe aufweisen. Staubförmige und feinkörnige Einsatzstoffe werden mit einem Trägergas, bevorzugt Stickstoff, Sauerstoff, Argon, Erdgas bzw. Gasgemische durch die Unterbaddüsen geleitet.

Zusätzlich und bevorzugt zu deren optimalen Schutz werden durch die Unterbaddüsen in allen Verfahrensschritten Kohlenwasserstoffe, wie vorzugsweise $CH_4$, $C_3H_8$, $C_4H_{10}$, deren Gemische, Dieselöl, Schweröl, etc., als Düsenschutz in die Schmelze eingeblasen. Dieses Einblasen erfolgt durch einen oder mehrere ringförmige Kanäle, welche den Zentralstrahl jeder Unterbaddüse umgeben. Zusätzlich zu den Kohlenwasserstoffen oder an deren Stelle können Inertgase, Dampf, $CO_2$, CO oder deren Mischungen als Düsenschutz in die Schmelze eingeblasen werden.

Nach einer besonders zweckmäßigen Ausgestaltung der Erfindung werden bei den Verfahrensschritten während des Blasevorganges die Temperatur und/oder die chemische Analyse der Schmelze, vorzugsweise durch eine Online-Auswertung der von der Schmelze an der Düsenmündung abgestrahlten elektromagnetischen Wellen, welche durch eine Unterbaddüse zu einer Auswerteeinrichtung gelangen, bestimmt und in Abhängigkeit von der Temperatur und/oder der chemischen Analyse Vorgabewerte für das Auf- und Unterbadblasen und für die Zugabe von Legierungsmitteln, Energieträger, Auf- und Entkohlungsmitteln, etc., in einem Prozessmodell bestimmt.

Im Einzelnen kann für das Unterbadblasen und im Speziellen für das Bodenblasen aus einer Vielzahl von Verfahrensvarianten gewählt werden, die von verschiedensten Randbedingungen abhängen. Hierbei sind bestehende Produktionsanlagen und für den konkreten Anlagenbetreiber mehr oder weniger wirtschaftlich verfügbare Einsatzstoffe (Legierungsmittel, Reduktionsmittel, Energieträger) und Gase in Betracht zu ziehen. Mögliche Varianten sind in der folgenden Tabelle II aufgelistet und können für den Einzelfall im Rahmen des Schutzumfanges der Erfindung modifiziert werden. Für das Unterbadblasen sind die aufgelisteten Verfahrensvarianten zielführend, wobei die in der Tabelle II jeweils fett gedruckte Ringe "O" bei dem jeweiligen Verfahrensschritt die Basisvariante repräsentiert.

Für das Unterbadblasen, hierbei speziell für das bevorzugte Bodenblasen, aber auch für ein Seitenblasen, werden bevorzugt mit Kohlenwasserstoff bzw. mit einem Gemisch aus Kohlenwasserstoff und Inertgas geschützte Mehrrohrdüsen, insbesondere Zweirohrdüsen angewandt. Daher werden in der folgenden Tabelle II die zu blasenden Medien der Zentralstrahldüse, wie auch die im Ringspalt einer Ringspaltdüse zwischen einer Zentraldüse und dem äußeren Düsenrohr(en) - Ringdüsen - zu blasenden Medien für die einzelnen Verfahrensschritte beschrieben.

**Tabelle II : Unterbadblasen / bevorzugt Bodenblasen:** Blasarten und Medien in den Verfahrensschritten 1 bis 3

| Blasart | Medien | Verfahrenschritt 1 | Verfahrensschritt 2 | Verfahrensschritt 3 |
|---|---|---|---|---|
| bevorzugt Bodenblasen | **Zentraldüsen** | | | |
| | $O_2$ | O | O | O |
| | $O_2$ +Inertgas | (o) | (o) | O |
| | Inertgas **) | ((o)) | ((o)) | (o) |
| | Inertgas + C-Träger (Kohle, Koks,..) ***) | O | (o) | ((o)) |
| | Inertgas + C-Träger + Oxide | ((o)) | ((o)) | ((o)) |
| | Inertgas + Cr-Erz | (o) | (o) | ((o)) |
| | Inertgas + Feinstaub, Asche, Abfall, Zunder ***) | O | (o) | ((o)) |
| | Inertgas + Ni-Träger (Nickelerz, NiO, Ni(COH)2, Sinter, etc) | (o) | (o) | O *) |
| | O2(Inertgas) + Schlackenbildner, wie CaO, Al2O3, SiO2, CaF2, MgO etc | (o) | ((o)) | ((o)) |
| | **Ringspaltdüsen** | | | |
| | Kohlenwasserstoff z.B. (CH4, C3H8, C4H10) | O | O | O |
| | Kohlenwasserstoff + Inertgas oder CO2 bzw. Wasserdampf | O | O | O |
| | Inertgas **) | (o) | (o) | (o) |

O    Basisvariante
(o)    Option
((o))    eher selten
*)    oder vermischt mit C-Träger bzw. brikettiert, pelletiert, stückig von oben chargiert zugegeben
**)    mit Ausnahme von: Chargieren, Probenahmen, Temperaturmessung, Spülen, Ausleeren, ..
***)    C-Träger können auch stückig vom Hochbunker aus dosiert chargiert werden und
   feinkörnige Stoffe, wie Staub, Zunder, Ni-Träger können auch brikettiert von oben dosiert
   der Schmelze zugeführt werden.

Je nach Bedarf, der sich zweckmäßig nach den Chargengewichten in den einzelnen Verfahrensschritten richtet, den verfügbaren Mengen an Cr-legiertem oder Cr- und Ni-legiertem Stahlschrott und den Gießformaten auf der Stranggießanlage, wird in den einzelnen Verfahrensschritten eine aus entphosphortem Roheisen bestehende Basisschmelze in das jeweilige Reaktionsgefäß eingebracht. Diese Basisschmelze kann infolge ihrer Rohstoffbasis bereits Cr und Ni in geringen Mengen enthalten und wird mit einer Badtemperatur von 1220°C bis 1650°C in den einzelnen Verfahrensstufen, die Mengenbilanz ergänzend, eingebracht. Eine günstige Ausgangsbasis für den erfindungsgemäßen Erzeugungsprozess bildet eine Basisschmelze mit folgender Zusammensetzung:

2,0 - 4,7 Gew.-% C,
< 1,0 Gew.-% Mn,
< 0,025 Gew.-% P,
< 0,03 Gew.-% S,

Rest Fe und verfahrensbedingte Verunreinigungen.

Das Roheisen für die eingesetzte Basisschmelze kann sowohl von einem konventionellen Hochofen oder aus einer HI-Smelt-Anlage oder aus einer beliebigen anderen Roheisenquelle stammen.

Alternativ zur Erzeugungsroute "Roheisenerzeugung" besteht die Möglichkeit, dass die Basisschmelze unter Einwirkung elektrischer Energie, insbesondere in einem Elektrolichtbogenofen, erzeugt wird. Hierbei kann, in Abhängigkeit von den gewählten Einsatzstoffen, sowohl eine unlegierte als auch eine speziell vorlegierte Basisschmelze erschmolzen werden.

Weiters besteht die Möglichkeit, dass die Basisschmelze alternativ zum entphosphortem Roheisen oder anteilig dazu aus Abfallstoffen der Ferronickel-Produktion durch Schmelzreduktion gebildet wird. Der Anteil der Basisschmelze aus Abfallstoffen aus der Ferronickelproduktion kann hierbei bis zu 50% betragen. Die in größeren Mengen verfügbaren, auf Halde liegenden Abfallstoffe aus der Ferronickel-Produktion enthalten einen Ni-Anteil von etwa 2 Gew.-% in Form von Nickeloxid. der Rest besteht aus Kohle und Schlacke. Diese Abfallstoffe können in einem, den drei erfindungsgemäßen Verfahrensschritten vorgelagerten Verfahrensschritt einer Schmelzreduktion unterzogen werden, wobei dieser vorgelagerte Verfahrensschritt gleichzeitig der Basisschmelze, beispielsweise unter Zumischung von entphosphortem Roheisen, mit umfasst. Es besteht aber auch die Möglichkeit, die Abfallstoffe aus der Ferronickel-Produktion bevorzugt in den ersten Verfahrensschritt, mit geringeren Anteilen auch in den zweiten oder dritten Verfahrensschritt einzubringen und dort den Schmelzreduktionsprozess ablaufen zu lassen.

Hierbei ist die Schlackenwirtschaft wegen des erhöhten Schlackenanfalles besonders zu berücksichtigen.

Zur Optimierung der Wirtschaftlichkeit wird die $Cr_2O_3$-hältige unreduzierte Schlacke aus dem dritten Verfahrensschritt in den ersten Verfahrensschritt, vorzugsweise durch Heißwindaufblasen, rückgeführt und dort mit einem C-hältigem Reduktionsmittel reduziert. Durch die Kreislaufwirtschaft der Cr-hältigen Schlacke werden die Cr-Verluste im Gesamtprozess reduziert und insbesondere der FeSi-Verbrauch wesentlich erniedrigt. Durch die Vermeidung einer aggressiven Reduktionsschlacke (Zugabe von CaO, $CaF_2$ und FeSi) am Ende des dritten Verfahrensschrittes werden die Haltbarkeit der feuerfesten Ausmauerung des verwendeten Reaktionsgefäßes und die Produktivität erhöht. Die Gesamtschlackenmenge wird ebenfalls verkleinert und der Bedarf an Schlackenbildnern, wie Kalk, etc., im ersten Verfahrensschritt ganz oder teilweise eingespart. Gleichermaßen kann eine bestimmte Schlackenmenge auch im zweiten Verfahrensschritt verarbeitet werden. Allerdings erniedrigt sich dann die Chromerzmenge, sofern die Chargenfolgezeit nicht erhöht werden soll.

Wenn der erste Verfahrensschritt mit Sauerstoffaufblasen und Gasrückgewinnung durchgeführt wird, wird auf die Schlackenrückführung verzichtet und hauptsächlich der Staub rezirkuliert. Bei der Variante des Sauerstoff-Aufblasens - statt Heißwind - im ersten Verfahrensschritt wird weniger Chromoxid zu Chrom reduziert, d.h., dass bei gleicher Produktivität mehr HCFeCr chargiert werden muss. Besonders in diesem Fall ist die Zugabe von HCFeCr, welches 2,0 bis 4,5 Gew.-% Si enthält, in den letzten Blaseminuten, speziell den letzten 5 bis 10 Blaseminuten, des zweiten Verfahrensschrittes vorteilhaft, da dann das Si aus dem HCFeCr die Reduktion der Schlacke des zweiten Verfahrensschrittes unterstützt. Der dritte Verfahrensschritt wird in Hinblick auf die Schlackenmenge verkleinert.

Speziell für den Einsatz der Schlacke in der Zementindustrie ist es zweckmäßig, wenn in den letzten Blaseminuten, speziell den letzten 5 bis 10 Blaseminuten, des ersten und/oder zweiten Verfahrensschrittes die Schlackenbasizität ($CaO/SiO_2$) von 2,0 bis 2,5 auf etwa 1,4 durch Zugabe von $SiO_2$-Träger erniedrigt wird, sowie die Schlackenanalyse von Eisenoxid- und $Al_2O_3$-Träger auf Werte eingestellt werden, wie sie die Zementindustrie für Schlacken fordert, die als Klinkerersatz oder als Zumahlstoff bei der Zementerzeugung verwendet werden.

Darüber hinaus ist es je nach weiterem Einsatzzweck der Schlacke zweckmäßig, wenn die Schlacken des ersten und/oder zweiten Verfahrensschrittes nach dem Ausleeren der Metallschmelze auf die gewünschte Analyse und Temperatur konditioniert werden.

Im Anschluss an den dritten Verfahrensschritt wird die legierte Schmelze gegebenenfalls einer abschließenden pfannenmetallurgische Behandlung, vorzugsweise nach dem VOD-Verfahren, unterzogen, die eine oder mehrere der Maßnahmen Feinentkohlung, Feinlegierung, Entstickung, Reduktion, Entschwefelung, sowie eine Temperatureinstellung und eine Spühlbehandlung der Schmelze umfasst. Das VOD-Verfahren weist den Vorteil auf, dass bei einer Vakuumbehandlung einer Cr-legierten Schmelze die Entkohlung mit Sauerstoff weitgehend vor einer Chromoxidation abläuft und damit Chromverluste und der Verbrauch an FeSi, auch bei niedrigen C-Gehalten der Schmelze, bei den kleinen Schlacken mengen sehr gering gehalten werden können. Dem Entkohlungsschritt folgt eine Schlackenreduktion mit einem Gemisch aus FeSi, Aluminium, Kalk und $CaF_2$ zur Rückgewinnung des Chromoxids aus der Schlacke, wobei gleichzeitig der Sauerstoffgehalt der Schmelze auf ein Minimum reduziert wird. Während dieser Behandlungsphase erfolgen die Feinlegierung und eine letzte Entschwefelung der Schmelze. Die Kombination des dritten Verfahrensschrittes (K-OBM-S-Prozesses) mit der VOD-Behandlung bringt den Vorteil, dass auf den Einsatz von Argon bei allen drei Verfahrensschritten und insbesondere im dritten Verfahrensschritt im Reaktionsgefäß, speziell im K-OBM-S-Konverter, gänzlich verzichtet werden kann. Allerdings kann die Schmelze auch im dritten Verfahrensschritt auf die erforderlichen niedrigen C-Gehalte gefrischt werden, wenn keine Behandlung in einer VOD-Anlage stattfindet. Dann wird bei niedrigen C-Gehalten der Schmelze in den Zentralrohren der Bodendüsen mit Gemischen von Sauerstoff und Argon in Abhängigkeit vom C-Gehalt der Schmelze gefrischt.

Die Mengen der in den einzelnen Verfahrensschritten eingebrachten Einsatzstoffe, insbesondere Basisschmelze, gegebenenfalls Schrott, Cr-Erz und sonstige Legierungsmittel, werden so bestimmt, dass in den einzelnen Verfahrensschritten Abstichfolgezeiten erreicht werden, die die erforderliche Taktzeit für das aufeinander folgende Stranggießen der Chargen entsprechen. Gleichermaßen können die Abstichfolgezeiten auf die Taktzeiten anderer Weiterbehandlungs- und Weiterverarbeitungsschritte (z.B. andere Gießverfahren) abgestimmt werden. Produktspezifische Gießgeschwindigkeiten auf der Stranggießanlage und die vorgesehenen Gießformate haben wesentlichen Einfluss auf die vergießbare Stahlmenge pro Zeiteinheit, so dass die Einsatzmengen im vorgelagerten Stahlerzeugungsprozess angepasst werden. Es ist daher vorteilhaft, wenn insbesondere auf der Prozessleitebene das Stahlherstellungsverfahren steuernde Prozessmodelle Leitgrößen des nachgeordneten Gießprozesses, wie die Gießgeschwindigkeit und das Gießformat, oder Taktzeiten beim Gießen von Ferrolegierungen, zur Festlegung der Mengen der in den einzelnen Verfahrensstufen eingebrachten Einsatzstoffe einbezieht. Bei der Stahlerzeugung ist die Menge an eingebrachtem Chromerz, von der wiederum die Menge an eingebrachten Sauerstoff oder Heißwind und Kohle maßgeblich abhängt, der bestimmende Parameter für die zu erzeugende Stahlmenge pro Zeiteinheit. Dazu kommen Einflüsse, wie das Alter der Reaktionsgefäße und der Lanzen, der Temperatur der Basisschmelze, der Staub-, Schlacken- und Schrotteinsätze, usw. dazu, welche in den Prozessmodellen berücksichtigt werden.

Eine Stahlerzeugungsanlage zur Herstellung einer legierten Metallschmelze, die vorzugsweise Cr oder Cr und Ni enthält, ist von mehreren in einer Produktionslinie hintereinander angeordneten Reaktionsgefäßen gebildet, wobei jedes Reaktionsgefäß in seiner allgemeinen Ausgestaltung als beliebiges metallurgisches Gefäß betrachtet werden kann, solange die unter anderem in den Tabellen I und II aufgeführten Betriebsweisen berücksichtigt sind. Das Fassungsvolumen der einzelnen aufeinander folgenden Reaktionsgefäße ist so aufeinander abgestimmt, dass die in einem Produktionszyklus erzeugte vergießfertige legierte Metallschmelze der Gießkapazität einer nachgeordneten Stranggießanlage entspricht. Die in den einzelnen Reaktionsgefäßen eingesetzten Mengen an Einsatzstoffen sind in Hinblick auf metallurgische Gegebenheiten und möglichst übereinstimmenden Produktionszeiten in den einzelnen Reaktionsgefäßen ausgerichtet. Dem entsprechend umfasst die erfindungsgemäße Stahlerzeugungsanlage folgende in einer Produktionslinie hintereinander angeordnete Reaktionsgefäße und metallurgische Einrichtungen:

- mindestens eine Flüssigmetall-Chargiereinrichtung für den Transport einer Basisschmelze zu mindestens einem der Reaktionsgefäße,
- ein erstes Reaktionsgefäß mit mindestens einer Unterbadblaseinrichtung und einer Aufblaseeinrichtung,
- eine ersten Umleereinrichtung für die unmittelbare Überleitung einer ersten vorlegierten Schmelze vom einem ersten Reaktionsgefäß in ein zweites Reaktionsgefäß,
- ein zweites Reaktionsgefäß mit mindestens einer Unterbadblaseinrichtung und einer Aufblaseeinrichtung,
- eine zweite Umleereinrichtung für die Überleitung von mindestens einer Teilmenge einer zweiten vorlegierten Schmelze vom einem zweiten Reaktionsgefäß in ein drittes Reaktionsgefäß,
- ein drittes Reaktionsgefäß mit einer Unterbadblaseinrichtung und einer Aufblaseeinrichtung.

Die Aufblaseeinrichtung ist als Lanze für das $O_2$-Aufblasen oder als Heißwindlanze oder als Multifunktionslanze mit mehreren konzentrisch angeordneten Strömungskanälen pro Düse für verschiedene Einsatzstoffe ausgebildet. Generell ermöglichen neben einer konventionellen Sauerstoff-Blaselanze weitere Aufblaselanzen den Eintrag von sonstigen benötigten Einsatzstoffen in pulverförmiger oder feinkörniger Konsistenz.

Vorzugsweise ist das erste und zweite Reaktionsgefäß mit einer eigenen Lanze für den Eintrag von feinkörnigem Legierungsmittelträger, insbesondere Chromerz, und gegebenenfalls für den Eintrag von Grobstäuben ausgestattet. Zusätzlich zu den Anlagen für das Feststoffeinblasen sind den einzelnen Reaktionsgefäßen entsprechende periphere Versorgungseinrichtungen, wie Hochbunkeranlagen und Gasregelstationen zugeordnet.

Die Unterbadblaseinrichtung wird von Ringspaltdüsen, insbesondere Zweirohrdüsen, gebildet und ermöglicht den Einsatz unterschiedlichster Medien und feinkörniger Materialien. Vorzugsweise ist die Unterbadblaseinrichtung als Bodenblaseinrichtung ausgebildet.

Zweckmäßig umfasst die Unterbadblaseinrichtung einen Feststoffverteiler, der vorzugsweise am jeweiligen Reaktionsgefäß angeordnet ist. Aus dem Feststoffverteiler werden Feststoffe, wie vorzugsweise Staub, Kohle und Kalk, in feinkörniger Form den Unterbaddüsen mit einem Trägergas zugeführt und in die Schmelze eingeblasen.

Durch die Unterbadblaseinrichtung kann in effizienter Weise die Temperatur und/oder die chemische Analyse der Schmelze überwacht werden, wenn der Unterbadblaseinrichtung eine Messeinrichtung zur On-Line-Messung der Temperatur und/oder der chemischen Analyse der Schmelze zugeordnet sind. Bei dieser Art der Prozessführung, welche bevorzugt in allen Verfahrensschritten angewandt wird, ist die Unabhängigkeit der Messung von der Schlackenmenge und insbesondere der Schlackenkonsistenz besonders vorteilhaft. Eine entsprechende Einrichtung zur kontinuierlichen Temperaturmessung und chemischen Analyse der Schmelze ist in den Patentschriften/Patentanmeldungen EP-B 1 016 858, EP-B 868 656, WO 02/48661 und WO 02/27301 der Anmelderin beschrieben. Durch dieUnterbaddüse, die zur Online-Messung der Temperatur und der chemischen Analyse ausgestattet ist, werden keine Feststoffe eingeblasen.

Nach einer zweckmäßigen Ausführungsform ist dem dritten Reaktionsgefäß eine VOD-Anlage zur Feinung der aus dem dritten Reaktionsgefäß übergeleiteten Schmelze nachgeordnet.

Vorteilhaft ist dem dritten Reaktionsgefäß oder der VOD-Anlage eine von mindestens einer Stranggießanlage gebildete Stahlverarbeitungsanlage in einer Produktionslinie unmittelbar nachgeordnet. Bevorzugt ist die nachgeordnete Stranggießanlage mit einer oszillierenden Kokille für das Vergießen von Stahlsträngen mit Brammen- oder Dünnbrammenquerschnitt ausgestattet. Es können jedoch auch Stranggießanlagen beliebiger Bauart für beliebige Querschnittsformate oder bei Bedarf auch Blockguss eingesetzt werden.

Eine für die Umsetzung des Stahlerzeugungsverfahrens besonders zweckmäßige Auswahl an Reaktionsgefäßen ist gegeben, wenn das erste Reaktionsgefäß von einem Konvertergefäß, vorzugsweise von einem allotherm betriebenen Recyclingkonverter, oder einem modifizierten Elektroofen, das zweite Reaktionsgefäß von einem Konvertergefäß, vorzugsweise einem allothermen Konverter (KMS-S-Konverter) und das dritte Reaktionsgefäß von einem Konverter, vorzugsweise einem autothermen Konverter (K-OBM-S-Konverter) gebildet ist.

Unter einem modifizierten Elektroofen ist ein Elektroofen mit zusätzlichen Einrichtungen für die Erzchargierung, mit Einrichtungen für die diversen Blasevorgänge, wie Sauerstofflanzen, Heißwinddüsenlanzen, Unterbaddüsen und dergleichen zu verstehen. Die Abkürzung "KMS-S" steht für "Kombiniertes Maxhütte Stahlerzeugungsverfahren - stainless"; die Abkürzung "K-OBM-S" steht für "Kombiniertes Oxygen - Bodenblasen Maxhütte Stahlerzeugungsverfahren - stainless".

Zur Erzeugung einer zweckentsprechenden Basisschmelze ist dem ersten Reaktionsgefäß ein weiteres Reaktionsgefäß vorgelagert, welches zur Erzeugung einer Basisschmelze aus entphosphortem Roheisen als Entphosphorungseinrichtung ausgebildet ist. Zur Erzeugung einer Basisschmelze, unter anderem aus Abfallstoffen der Ferronickelproduktion, ist dieses weitere Reaktionsgefäß als Schmelzreduktionsreaktor ausgebildet. Für die Durchführung des Schmelzreduktionsprozess sind wegen des geringen Nickel-Anteiles in den Abfallstoffen der Ferronickelproduktion Mittel für einen hohen Energieeintrag vorzusehen, allerdings ermöglicht diese Verfahrensroute die wirtschaftliche Nutzung dieser bisher kaum genutzten und aus Umweltschutzgründen aufzuarbeitenden Abfallstoffe.

Bei den Chargierarbeiten und den Blaseprozessen tritt in hohem Maße eine das Umfeld belastende Staubentwicklung auf, sodass den einzelnen Reaktionsgefäßen vorzugsweise trocken arbeitende Entstaubungsanlagen (Elektrofilter) zugeordnet sind. Neben einer weitgehenden Vermeidung der Umweltbelastung werden Wertstoffe zurückgewonnen, die dem Produktionsprozess wieder zugeführt werden.

Das Zusammenspiel der Stahlerzeugungsanlage und der nachgeordneten Stahlverarbeitungsanlage wird wesentlich erleichtert, wenn der Stahlerzeugungsanlage und der Stahlverarbeitungsanlage ein, zumindest die eingesetzten Reaktionsgefäße und die Stranggießanlage umfassendes, übergreifendes Leitsystem mit einzelnen der Stahlerzeugungsanlage und der Stahlverarbeitungsanlage zugeordneten Prozessrechnem übergeordnet ist und ein die Stahlerzeugungsanlage regelndes Prozessmodell oder regelnde Teilprozessmodelle Leitgrößen der nachgeordneten Stahlverarbeitungsanlage, wie beispielsweise die Gießgeschwindigkeit und das Gießformat auf der Stranggießanlage, zur Berechnung der Mengen, der in den einzelnen Verfahrensstufen eingebrachten Einsatzstoffe, über das Leitsystem übermittelt erhält und entsprechend den berechneten Mengen die Zuführung der Einsatzstoffe in die Reaktionsgefäße erfolgt.

Zusätzlich ist die Erzeugungsanlage mit einer Level 1 und Level 2 Automation, mit Entstaubungs- und Gasspeicheranlagen, mit Schlackentransport- und Bunkeranlagen, usw., ausgestattet.

In zumeist vorgegebenen Zeitabständen sind Reparaturarbeiten an den Betriebsanlagen durchzuführen. Bei den Reaktionsgefäßen sind die feuerfesten Ausmauerungen auszubessern oder eine Neuzustellung durchzuführen. Hierfür muss das Reaktionsgefäß für einige Stunden aus der Produktionslinie entfernt werden und soweit möglich, wird der Betrieb mit einem Ersatzgefäß fortgesetzt werden (Wechselkonvertergefäß). Für den Fall, dass diese Möglichkeit nicht besteht (stationäre Reaktionsgefäße), wird vorgeschlagen, dass die drei Verfahrensschritte während des Zeitraumes der Erneuerungsarbeiten auf die jeweils verbleibenden zwei Reaktionsgefäße aufgeteilt werden. Da für alle drei Verfahrensstufen Reaktionsgefäße vorgesehen sind, die im Wesentlichen über vielseitig verwendbare Aufblase- und Unterbadblaseinrichtungen verfügen, bestehen keine grundsätzlichen Hindernisse, Verfahrensschritte teilweise auf das jeweils nachfolgende oder vorgelagerte Reaktionsgefäß zu verschieben. Insgesamt wird bei gleich bleibendem Chargengewicht die Produktionszeit höher, wodurch die Auslastung der nachgeordneten Stranggießanlage und die Produktivität abnimmt. Es ist jedoch möglich, den Produktionsprozess aufrecht zu erhalten.

Wenn beispielsweise das erste Reaktionsgefäß von einem stationären Recyclingkonverter gebildet ist und wegen der Erneuerung der feuerfesten Zustellung vorübergehend (z.B. für 4 Tage) nicht produzieren kann, übernimmt das zweite Reaktionsgefäß einen Teil der Produktion des ersten Gefäßes. Fällt das zweite Reaktionsgefäß aus, so übernimmt der Recyclingkonverter einen Teil dieser Produktion. Beide Konverter werden allotherm betrieben, so dass diese Flexibilität möglich ist.

Fällt das dritte Reaktionsgefäß wegen der Erneuerung der feuerfesten Auskleidung aus, so übernimmt der Recyclingkonverter einen Teil der Produktion des meist autotherm arbeitenden ersten Gefäßes und im zweiten Reaktionsgefäß wird ein Teil der Produktion des Recyclingkonverters durchgeführt.

Weitere Vorteile und Merkmale der vorliegenden Erfindung ergeben sich aus der nachfolgenden Beschreibung nicht einschränkender Ausführungsbeispiele, wobei auf die beiliegenden Figuren Bezug genommen wird, die folgendes zeigen:

Fig.1      einen Recycling-Konverter mit schematischer Darstellung seiner erfindungsgemäßen Einsatzmöglichkeiten gemäß dem ersten Verfahrensschritt,

Fig. 2     einen KMS-S - Konverter mit schematischer Darstellung seiner erfindungsgemäßen Einsatzmöglichkeiten gemäß dem zweiten Verfahrensschritt,

Fig. 3     einen K-OBM-S - Konverter mit schematischer Darstellung seiner erfindungsgemäßen Einsatzmöglichkeiten gemäß dem dritten Verfahrensschritt,

Fig. 4     eine Zusammenstellung des ersten Ausführungsbeispieles zur Herstellung eines mit Cr und Ni legierten Stahles der Güte SUS 304,

Fig. 5     Verlaufslinien für den Cr-Gehalt und das Schmelzengewicht beim erfindungsgemäßen Verfahren gemäß dem Ausführungsbeispiel 1.

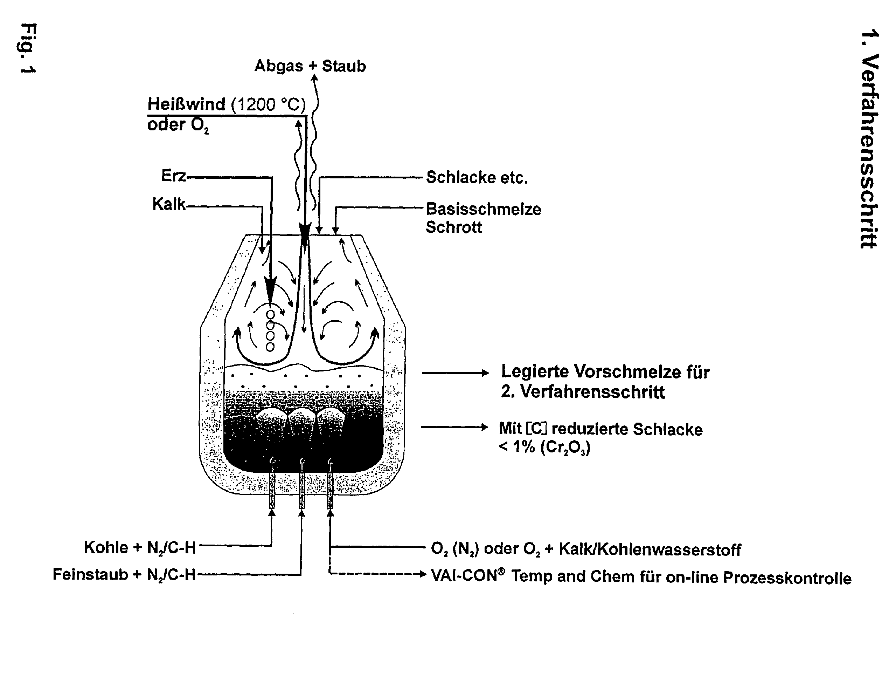

Die Darstellungen in den Figuren 1 bis 5 beziehen sich durchwegs auf die Hauptvariante der vorliegenden Erfindung und die konkreten Angaben zu den Einsatzmengen an verschiedenen Rohstoffen, den Legierungszusammensetzungen, den Schmelztemperaturen, etc., beziehen sich auf das im Weiteren abgehandelte Ausführungsbeispiel 1.

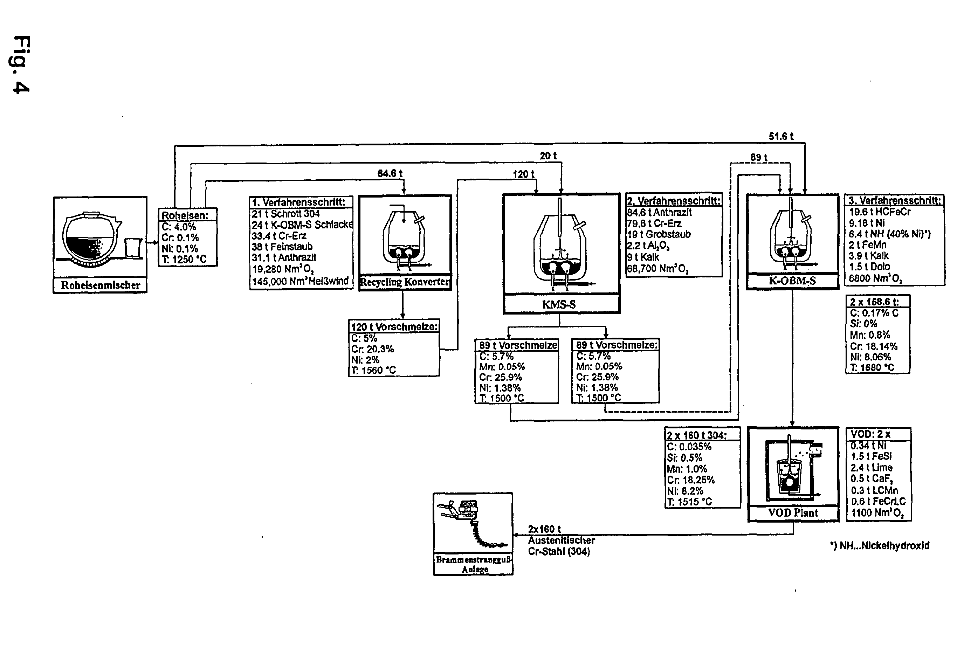

In Fig. 4 ist in einer schematischen Zusammenstellung das Verfahren zur Herstellung einer legierten Metallschmelze mit seinen wesentlichen Verfahrensschritten und den zur Umsetzung des Verfahrens eingesetzten Reaktionsgefäßen dargestellt. Diese schematische Darstellung umfasst einen Roheisenmischer zur Bereitstellung einer Basisschmelze, die in vorbestimmten Mengen in den drei Verfahrensschritten zugemischt wird. Der erste Verfahrensschritt wird in einem Recycling-Konverter durchgeführt, in dem eine erste vorlegierte Schmelze erzeugt wird. Der zweite Verfahrensschritt wird in einem KMS-S-Konverter durchgeführt, in dem auf der Grundlage der ersten vorlegierten Schmelze eine zweite vorlegierte Schmelze erzeugt wird. Der dritte Verfahrensschritt findet in einem K-OBM-S-Konverter statt, in dem die in zwei Chargen geteilte zweite vorlegierte Schmelze in aufeinanderfolgenden Schritten weiter behandelt wird. Die erzeugte, auf eine bestimmte chemische Analyse und Temperatur eingestellte legierte Schmelze, wird in einer VOD-Anlage finalisiert und einem kontinuierlichen Gießprozess zugeführt und zu Brammen vergossen. Die in Fig. 4 zu den einzelnen Verfahrensschritten und -stufen angegebenen Werte beziehen sich auf einen austenitischen Cr-Stahl der Qualität SUS 304 mit einem Chagengewicht von 2 x 160 t, die im Sequenzguss auf einer Stranggießanlage vergossen werden.

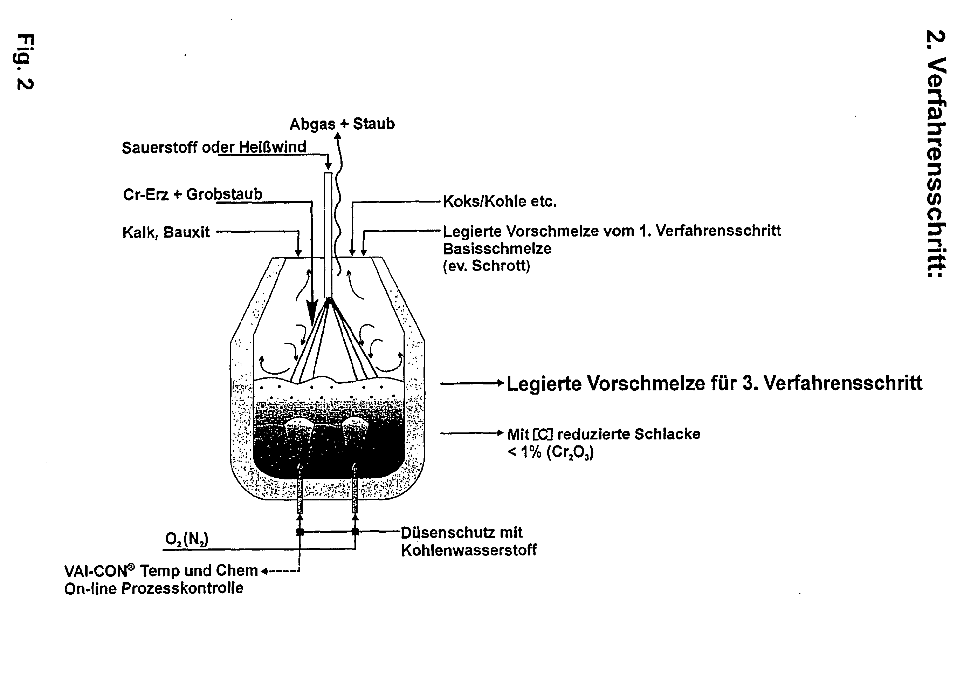

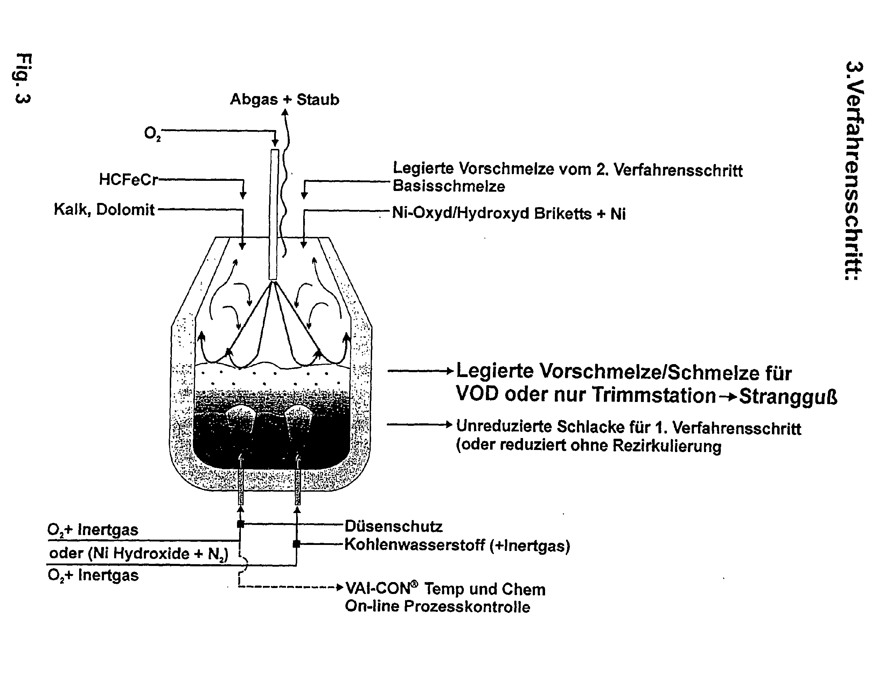

In Fig. 1 ist der erste Verfahrensschritt mit den Verschiedenen Einsatzstoffen und den Möglichkeiten ihrer Einbringung schematisch dargestellt. In analoger Weise zeigen die Fig. 2 den zweiten Verfahrensschritt und Fig. 3 den dritten Verfahrensschritt mit der im jeweiligen Verfahrensschritt eingesetzten Einsatzstoffen und den Möglichkeiten ihrer Einbringung.

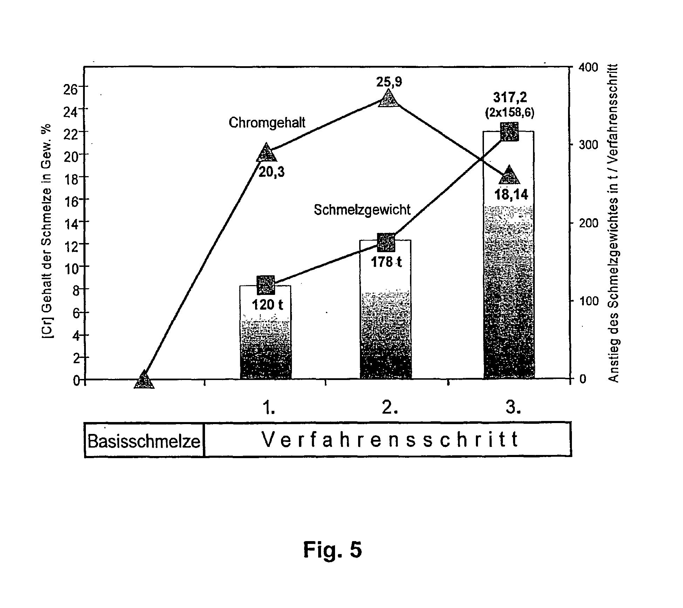

In Fig. 5 ist die Aufteilung der Basisschmelze (187,8 t) auf die drei Verfahrensschritte des Ausführungsbeispiels 1 und der beschriebenen Variante mit Heißwindaufblasen im ersten Verfahrensschritt gemäß Ausführungsbeispiel 1 dargestellt. Aus Fig. 5 geht weiters hervor, dass der Chromgehalt bereits im ersten Verfahrensschritt von Null auf das gewünschte hohe Niveau durch die Reduktion von Chromoxiden gebracht wird und dessen wesentlicher Anstieg und somit auch der Anstieg von Chromverlusten durch Zugabe von Basisschmelze vermieden wird. Diese gestufte Zugabe von Basisschmelze, sowie die Chargenteilung am Ende des zweiten Verfahrensschrittes ermöglichen auch die Erreichung einer sehr hohen Produktivität mit relativ kleinen Einheiten, welche in der Taktfolge bestens aufeinander abgestimmt sind und relativ niedrige Investitionskosten ermöglichen.

Für die Erzeugung von Metallschmelzen, welche Ferrolegierungen, wie z.B. FeCr darstellen, kann auf die Verdünnung der Cr-Gehalte oder anderer Legierungselemente, wie Mn, Ni, etc., durch unlegierte Basisschmelze im zweiten und den dritten Verfahrensschritten verzichtet werden, damit der Legierungsmittelgehalt auf die gewünschten hohen Gehalte gebracht wird. Bei der Erzeugung von FeNi wird die Ni-Anreicherung am Ende des dritten Verfahrensschrittes noch durch eine Verschtackungsperiode eines Teiles des Eisens in der Metallschmelze erhöht, sodass die gewünschten Ni-Endgehalte einfach und treffsicher eingestellt werden können. Die Cr- oder auch die Mn-Legierungen können im dritten Verfahrensschritt weitgehend entkohlt werden, wodurch sich der Marktwert dieser Legierungen in etwa verdoppelt.

Ausführunctsbeispiel 1:

Für die Herstellung von 2 Chargen mit je 160 t vergießfertigen Flüssigstahles der Güte SUS 304 wird wie folgt vorgegangen:

Nach der Hochofenroute werden 187,8 t Roheisen erzeugt und in einem Roheisen-Behandlungsstand entschwefelt und entphosphort. Das entphosphorte Roheisen bildet eine Basisschmelze für die Erzeugung von jeweils einer vorlegierten Schmelze im ersten und zweiten Verfahrensschritt und die Bildung einer legierten Schmelze vorgegebener Zielzusammensetzung im dritten Verfahrensschritt. Die Basisschmelze enthält 4,0 Gew.-% C, 0,1 Gew.-% Cr, 0,1 Gew.-% Ni, <0,01 Gew.-% P und der Rest ist Eisen und sonstige verfahrensbedingte Verunreinigungen. Die Einsatztemperatur der Basisschmelze beträgt 1280°C.

Im ersten Verfahrensschritt werden in das erste heiße Reaktionsgefäß, welches ein 120 t Recycling-Konverter ist, der im Herstellwerk anfallende und verfügbare legierte Schrott (21 t der Güte SUS 304) und danach 64,6 t der bereitgestellten Basisschmelze chargiert. Durch Kohleeinblasen, Bodenblasen mit Sauerstoff und Heißwindaufblasen wird die Badtemperatur auf 1550°C und der C-Gehalt der Schmelze auf 5Gew.-% erhöht. Es erfolgt die dosierte Zugaben von 12 t aus der dritten Verfahrensstufe rezirkulierte, unreduzierte K-OBM-S-Schlacke mit einem Anteil von 45% $Cr_2O_3$ und CaO; etc., in die Basisschmelze. Danach erfolgt das Einblasen von Cr- und Ni-oxidhaltigen Feinstaub und die dosierte Zugabe von weiteren 12 t unreduzierter K-OBM-S-Schlacke, sowie von Chromerz über eine seperate, wassergekühlte Lanze, welche durch die Konvertermündung in den Recycling-Konverter eingefahren wird. Dies erfolgt unter Beibehaltung des Bodenblasens mit Sauerstoff und Kohle über seperate Düsengruppen und Versorgungsleitungen, Dosier- und Vorratssysteme. Von Blasbeginn an wird mit einem auf etwa 1200°C vorgeheizten Heißwind über eine Heißwindlanze mit einem Nachverbrennungsgrad von 60% aufgeblasen. Zur Verringerung der Abgasmenge könnte der $O_2$-Gehalt des Heißwindes durch eine $O_2$-Zugabe erhöht werden. Als preiswerte Legierungsmittelträger werden 33,4 t Chromerz mit einem Anteil von 45 Gew.-% $Cr_2O_3$, 24 t Schlacke mit einem Anteil von 45 Gew.-% $Cr_2O_3$ und 38 t Feinstaub mit 14,3 Gew.-% $Cr_2O_3$ +Kalk + Kohle verarbeitet. Insgesamt werden 31,1 t Anthrazit, 19,280 $Nm^3$ $O_2$ und 145,000 $Nm^3$ Heißwind in der ersten Verfahrensstufe in den Konverter eingeblasen.

Nach einer Chargenzeit von etwa 160 min liegen 120 t einer aufgekohlten, 1560°C heißen, ersten vorlegierten Schmelze mit folgender Zusammensetzung vor: 5,0 Gew.-% C, 20,3 Gew.-% Cr, 2,0 Gew.-% Ni, Rest Eisen und sonstige verfahrensbedingte Verunreinigungen. Die Schlacke wurde am Blasende nicht mit $Al_2O_3$, $SiO_2$, etc. für spezielle Weiterverarbeitung konditioniert. Der Gehalt an $Cr_2O_3$ dieser Schlacke liegt unter 1,0 Gew.-% und ist verwertbar.

Im zweiten Verfahrensschritt werden die 120 t der ersten vorlegierten Schmelze mit 20 t Basisschmelze mit einer Umleereinrichtung zusammengeleert und in das zweite Reaktionsgefäß, welches von einem KMS-S - Konverter gebildet ist, chargiert. Die Temperatur der Mischschmelze wird auf 1560°C durch Boden- und Aufblasen von $O_2$ und Zugabe von Stückkohle aus dem Hochbunker erhöht. Danach wird Chromerz und rezirkulierter Grobstaub über eine separate Lanze auf die Schlacke und Schmelze unter kombiniertem Blasen mit 02, Zugabe von Anthrazit und Kalk aufgebracht und reduziert. Die Schlackenbasizität (CaO/$SiO_2$) wird auf 2,5 eingestellt. Eine teure Schlackenreduktion mit FeSi ist in keinem der drei Verfahrenschritte notwendig und angewandt, d.h., dass die Schlacke im ersten und zweiten Verfahrensschritt mit Kohle reduziert wird. Die Schlacke aus dem dritten Verfahrensschritt wird in das erste Reaktionsgefäß rezirkuliert und dort ebenfalls mit Kohle reduziert. Das Abgas wird nicht wie im ersten Verfahrensschritt abgefackelt, sondern nach der Gasreinigung in einem Gasspeicher gespeichert und dann weiter verwertet (Abgasgutschrift). Dies ist möglich, da mit $O_2$ bei wesentlich geringerem Nachverbrennungsgrad der Prozessgase (CO und $H_2$) aufgeblasen wird.

Insgesamt werden in dieser zweiten Verfahrensstufe 79,6 t Cr-Erz und 19,0 t legierte Stäube, 84,6 t stückiger Anthrazit, 2,2 t $Al_2O_3$, 9 t Kalk, 68,700 $Nm^3$ $O_2$, 20 t Basisschmelze und 120 t erste vorlegierte Schmelze zur Erzeugung von 2 x 89 t zweiter vorlegierter Schmelze mit der folgenden Analyse erzeugt: : 5,7 Gew.-% C, 0,05 Gew.-% Mn, 25,9 Gew.-% Cr, 1,38 Gew.-% Ni, Rest Eisen und verfahrensbedingte Verunreinigungen. Die Temperatur dieser zweiten vorlegierten Schmelze beträgt am Blasende 1500°C. Die Abstichfolgezeit beträgt 180 min.

Innerhalb dieser Abstichfolgezeit können zwei dritte Verfahrensschritte durchgeführt werden, sodass die 178 t einer zweiten vorlegierten Schmelze in 2 x 89 t für zwei dritte Verfahrensschritte geteilt werden. Dies erfolgt durch den Abstich in zwei Pfannen.

In den beiden dritten Verfahrensschritten, die nacheinander in einem Reaktionsgefäß nach der Art eines K-OBM-S - Konverters durchgeführt werden, wird die Mengenbilanz durch Chargieren von jeweils 51,6 t Basisschmelze für ein Abstichgewicht von jeweils 158,6 t angepasst.

Die Schlackenanalyse am Ende des zweiten Verfahrensschrittes kann durch ein Bodenblasen mit Inertgas bzw. durch Zugabe von $SiO_2$, $Al_2O_3$, $Fe_2O_3$-Träger oder auch von FeSi, Al etc., innerhalb von einigen Minuten auf die gewünschte Analyse, welche dem gewünschten Verwendungszweck entspricht, angepasst werden. Das trifft gleichermaßen auch auf den ersten Verfahrensschritt zu, sodass insgesamt eine optimale Nutzung, z.B. in der Zementindustrie, von Schlacken, Stäuben, diversen Abfallstoffen usw. gewährleistet ist.

Der Cr-Gehalt der Vorschmelze wird durch die Zugabe der Basisschmelze auch im dritten Verfahrensschritt erniedrigt, sodass in diesem 19,6 t HCFeCr pro Charge zum Erreichen eines Cr-Gehaltes von 18,14 Gew.-% Cr beim Abstich der Schmelze zugeführt werden.

Als Ni-Träger wird "Mixed Hydroxid Product", ein Ni-Hydroxid mit 40% Ni bei noch hohem C-Gehalt in der Schmelze in einer Menge von 6,4 t durch Bodendüsen autotherm eingeblasen. Das restliche erforderliche Nickel in einer Menge von 9,18 t wird in den Konverter chargiert, sodass beim Abstich ein Ni-Gehalt von 8,06 Gew.-% vorliegt. Zur Einstellung des gewünschten Mn-Gehaltes werden 2 t FeMn beim Blasen chargiert.

Die Schmelze wird durch kombiniertes Blasen mit 02 auf 0,17 Gew.-% C gefrischt. Ab einem C-Gehalt von 1,5 Gew.-% wird beim Bodenblasen dem $O_2$ Stickstoff - an Stelle von Ar - zur Erniedrigung des CO-Partialdruckes und somit zur Verbesserung der Entkohlung zugemischt. In der VOD-Anlage wird die Schmelze anschließend auf 450 ppm N entstickt.

Die Abstichfolgezeiten für die beiden Chargen betragen 2 x 90 min. Es werden 2 x 160 t legierter Schmelze mit folgender Analyse erzielt: 0,17 Gew.-% C, 0,8 Gew.-% Mn, 18,14 Gew.-% Cr, 8,06 Gew.-% Ni, Rest Eisen und verfahrensbedingte Verunreinigungen. Die Schmelzentemperatur beträgt 1680°C.

Die Höhe und der zeitliche Verlauf der Schmelzentemperatur und der mengenmäßige Anteil wichtiger Elemente der Schmelze wird in allen drei Verfahrensschritten mit der Online-Messung von Temperatur und chemischer Analyse durch jeweils eine Bodendüse mehrmals pro Charge gemessen, wodurch die Verfahrensschritte metallurgisch und zeitlich sehr gut kontrolliert werden.

Der Konverterabstich erfolgt im dritten Verfahrensschritt über ein Abstichloch. Hierbei wird die Trennung von Schlacke und Stahl am Abstichende mit einem pneumatisch arbeitenden Schlackenstopper vorgenommen. Das Mitlaufen der Schlacke mit dem Stahl wird mit Hilfe einer Infrarotkamera und entsprechender Software (Iris-System) angezeigt und das Beenden des Abstiches der Schmelze durch den Schlackenstopper durch ein Signal dieses Iris-Systems ausgelöst.

In den 160 t Pfannen befindet sich vor der VOD-Behandlung reproduzierbar nur etwa 3 kg Schlacke / t Stahl, wodurch die Chromverschlackung begrenzt und der FeSi-Verbrauch niedrig gehalten werden kann. Ein Abschlacken der Pfanne ist nicht erforderlich.

In der VOD-Anlage wird die Schmelze fertig gefrischt, entstickt, feinlegiert, desoxidiert, entschwefelt und gespült. Für diese Maßnahmen werden insgesamt 0,34 t Ni, 1,5 t FeSi, 2,4 t Kalk, 0,5 t CaF2, 0,3 t LCMn und 0,6 t FeCrLC zugeführt und 1100 Nm$^3$ $O_2$ als Frischgas eingesetzt. Damit wird folgende Endeinstellung der Legierung erreicht: 0,035 Gew.-% C, 0,5 Gew.-% Si, 1,0 Gew.-% Mn, 18,25 Gew.-% Cr, 8,2 Gew.-% Ni. Die Schmelzentemperatur beträgt 1515 °C.

Jede Charge (2 x 160 t) dieser vergießfertigen Schmelze wird bei abgestimmten Brammenquerschnitten und Gießgeschwindigkeiten auf einer Brammenstranggießanlage in etwa 90 min in einem Sequenzgießverfahren vergossen (Fig. 4). Der Betriebskostenvorteil dieser Verfahrensschritte liegt im Vergleich zur herkömmlichen Verfahrensroute über Elektrolichtbogenofen und AOD-Konverter, Pfannenbehandlungsstand und Stranggießanlage bei mindestens 230,- EURO/t austenitischem Flüssigstahl.

Ausführungsbeispiel 2:

Wie im 1. Ausführungsbeispiel bezieht sich dieses Ausführungsbeispiel ebenfalls auf die Herstellung von 2 Chargen mit je 160 t vergießfertigen Flüssigstahles der Güte SUS 304, wobei der erste und dritte Verfahrensschritt wie beim 1. Ausführungsbeispiel stattfindet.

Falls das Abgas aus dem zweiten Verfahrensschritt nicht weiter verwendet werden soll (keine Abgasgutschrift) und / oder das Ziel verfolgt werden soll, den Kohle- und Sauerstoffverbrauch drastisch zu verkleinern, kann auch im zweiten Verfahrensschritt mit Heißwind (1200°C, 21% $O_2$)von oben - zum Frischen der Schmelze und weitgehender Nachverbrennung von CO und H2 (Nachverbrennungsgrad z.B. 60%) - geblasen werden.

Bei einem Einsatz von 120 t einer ersten vorlegierten Schmelze aus dem ersten Verfahrensschritt und 20 t Basisschmelze, sowie 79,6 t Cr-Erz, 19 t Grobstaub mit erheblichem C-Anteil und 9 t Kalk werden pro 178-t-Charge statt 68700 Nm$^3$ $O_2$ nur 20300 Nm$^3$ $O_2$ und statt 84,6 t Anthrazit nur 44,5 t Anthrazit benötigt. Zusätzlich sind zur Erzeugung der benötigten 167000 Nm$^3$ Heißwind 8500 Nm$^3$ Erdgas erforderlich.

Die chemische Analyse der 178 t einer zweiten vorlegierten Schmelze am Ende des zweiten Verfahrensschrittes bei Anwendung des Heißwindaufblasens und die Temperatur dieser Schmelze entsprechen jener mit Sauerstoffaufblasen in diesem Verfahrensschritt (siehe 1. Ausführungsbeispiel).

Die Chargengewichte in den drei Verfahrensschritten sind in den Ausführungsbeispielen 1 und 2 mit 120 t im ersten Verfahrensschritt, mit 178 t im zweiten Verfahrensschritt und mit 2 x 160 t im dritten Verfahrensschritt so gewählt, dass bei einer hohen Produktivität von über 800.000 Jahrestonnen rostfreiem Stahles im dritten Reaktionsgefäß und in den nachgeschalteten Anlagen (Gießkrane, Pfannen, Pfannenofen, VOD-Anlage, Drehturm der Stranggießanlage(n), Fundamente) nur mit 160 t Flüssigstahl pro Charge gerechnet werden muss. Dies ist durch die abgestimmten Taktzeiten, aber insbesondere durch die drei Verfahrensschritte und Chargenteilung nach dem zweiten Verfahrensschritt und durch den schrittweisen Aufbau des Schmelzengewichtes in den Verfahrensschritten möglich. Dabei ist zu berücksichtigen, dass im 180-Minutentakt insgesamt 57 t Staub, 24 t Schlacke und insbesondere 113 t Cr-Erz geschmolzen und reduziert und insgesamt 320 t Flüssigstahl erzeugt werden.

**Patentansprüche**

1. Verfahren zur Herstellung einer legierten Metallschmelze auf Eisenbasis, die vorzugsweise Cr oder Cr und Ni enthält, in mehreren aufeinander folgenden und aufeinander abgestimmten Verfahrensschritten, **dadurch gekennzeichnet, dass**

   • in einem ersten Verfahrensschritt in eine Basisschmelze Legierungsmittelträger eingebracht werden und unter zusätzlicher Zuführung eines Reduktionsmittels, rezirkulierter Schlacke und/oder von Schlackenbildner und eines Energieträgers unter der Einwirkung von Auf- und Unterbadblasen mit einem Sauerstoffträger die Legierungsmittelträger aufgeschmolzen und weitgehend reduziert und eine erste vorlegierte Schmelze erzeugt wird,
   • in einem zweiten Verfahrensschritt in die erste vorlegierte Schmelze ein Legierungsmittelträger, vorzugsweise ein Cr-Träger, und gegebenenfalls eine Basisschmelze eingebracht werden und unter zusätzlicher Zuführung eines Reduktionmittels, eines Schlackenbildners und eines fossilen Energieträgers unter der Einwirkung von Auf- und Unterbadblasen mit einem Sauerstoffträger der Legierungsmittelträger, vorzugsweise der Cr-Träger, aufgeschmolzen und weitgehend reduziert und eine zweite vorlegierte Schmelze erzeugt wird, ,
   • in einem dritten Verfahrensschritt der zweiten vorlegierten Schmelze Legierungsmittel, insbesondere Ferrolegierungen, und gegebenenfalls eine Basisschmelze zugesetzt werden, dass Schlackenbildner zugesetzt werden und unter der Einwirkung von Auf- und Unterbadblasen mit einem Sauerstoffträger ein Entkohlungsprozess durchgeführt und eine legierte Schmelze mit vorbestimmter chemischer Analyse und Temperatur eingestellt wird.

2. Verfahren nach Anspruch 1, **dadurch gekennzeichnet, dass** in einem oder mehreren der Verfahrensschritte Schrott, insbesondere mit Cr, bzw. Cr und Ni legierter Stahlschrott, und gegebenenfalls sonstige Metallträger, in vorbestimmter Menge zugegeben wird.

3. Verfahren nach Anspruch 1 oder 2, **dadurch gekennzeichnet, dass** zumindest im ersten und zweiten Verfahrensschritt eine CO + $H_2$-Nachverbrennung durch Aufblasen von Sauerstoff oder eines $O_2$-hältigen Gases, vorzugsweise mit Heißwind, stattfindet.

4. Verfahren nach einem der vorhergehenden Ansprüche, **dadurch gekennzeichnet, dass** im dritten Verfahrensschritt eine CO + $H_2$-Nachverbrennung mit Sauerstoff stattfindet.

5. Verfahren nach einem der vorhergehenden Ansprüche, **dadurch gekennzeichnet, dass** die im zweiten Verfahrensschritt erzeugte zweite vorlegierte Schmelze in mindestens zwei Teilmengen aufgeteilt wird und jede Teilmenge in jeweils einem dritten Verfahrenschritt mit einer Basisschmelze ergänzt wird, dass Legierungsmittel zugesetzt werden, die Cr oder Cr und Ni enthalten, dass Schlackenbildner zugesetzt werden und unter der Einwirkung von Auf- und Unterbadblasen mit einem Sauerstoffträger ein Entkohlungsprozess durchgeführt und eine legierte Schmelze mit vorbestimmter chemischen Analyse und Temperatur eingestellt wird.

6. Verfahren nach einem der vorhergehenden Ansprüche, **dadurch gekennzeichnet, dass** der C-Gehalt der Schmelze bis zu einem C-Gehalt von Maximal 8 Gew.-% im ersten und zweiten Verfahrensschritt mit steigenden Cr-Gehalten erhöht wird.

7. Verfahren nach einem der vorhergehenden Ansprüche, **dadurch gekennzeichnet, dass** das Aufblasen mit einem Sauerstoffträger im ersten und zweiten Verfahrenschritt mit Sauerstoff oder Sauerstoff und Stickstoff oder Heißwind oder einem mit Sauerstoff angereichertem Heißwind und im dritten Verfahrenschritt mit Sauerstoff oder einem Gemisch aus Sauerstoff und einem Inertgas erfolgt.

8. Verfahren nach einem der vorhergehenden Ansprüche, **dadurch gekennzeichnet, dass** das Aufblasen mit einem Sauerstoffträger im dritten Verfahrensschritt bei der Erzeugung einer Metallschmelze mit hohem Cr-Gehalt oder Ni-Gehalt oder Mn-Gehalt (Ferrolegierungen) zumindest teilweise mit Heißwind aufgeblasen wird.

**9.** Verfahren nach einem der vorhergehenden Ansprüche, **dadurch gekennzeichnet, dass** das Aufblasen im ersten und/oder zweiten Verfahrensschritt mit pulsierendem $O_2$, mit $O_2$ und Inertgas oder Heißwind oder mit $O_2$ angereichertem Heißwind durchgeführt wird.

**10.** Verfahren nach einem der vorhergehenden Ansprüche, **dadurch gekennzeichnet, dass** das Unterbadblasen im ersten Verfahrensschritt und gegebenenfalls im zweiten Verfahrensschritt eine oder mehrere der folgenden Maßnahmen a) bis f) umfasst:

a) ein Unterbadblasen zur CO-Bildung, Wärmeübertragung bei der Nachverbrennung, Energieeinleitung und Badbewegung, Mischung von Schmelze und Schlacke, sowie gegebenenfalls das Zerschneiden von Schrott und Metallträger mit

- $O_2$ oder einem Gemisch aus $O_2$ und einem Inertgas, wie vorzugsweise $N_2$, oder
- $O_2$ und einem Gemisch aus $O_2$ und einem Inertgas in aufeinander folgenden Schritten oder
- einem Gemisch aus Sauerstoff und Wasserdampf oder
- einem Gemisch aus Sauerstoff und $CO_2$;

b) die Zufuhr eines Energieträgers und eines Reduktionsmittels durch Unterbaddüsen;
c) das Einblasen von Stäuben, wie Hüttenkreislaufstoffen, Konverter- und Elektroofenstäube, Stäube von der Erzeugung von Ferrolegierungen, Asche, feinkörnige Ferrolegierungen oder Al;
d) das Einblasen von Fe-, Cr- und Ni-hältige Stäube zur Entsorgung und als Legierungsmittelträger;
e) das Einblasen von Schlackenbildnern, wie Kalk, $SiO_2$, Flussspat, Bauxit, Sand, jeweils mit Sauerstoff als Trägergas, solange die Cr-Gehalte der Schmelze etwa unter 10 Gew.-% liegen, oder mit Inertgas;
f) das Einblasen von mindestens einem der Stoffe Cr-Erz, Mn-Erz, Ni-Erz, Ni-Oxide, Nickelhydroxid, Stäuben, Aschen, Zunder, Schleifstäube, Sand, kontaminierter Bauschutt, Abfall aus Haushalt oder Industrie oder Shredderrückstände, Abfallstoffen als Legierungsmittelträger und/oder Schlackenbildner.

**11.** Verfahren nach Anspruch 10, **dadurch gekennzeichnet**, die Zufuhr eines Energieträgers und eines Reduktionsmittels nach Merkmal 10b) zusätzlich oder alternativ in stückiger Form von oben in die Schmelze erfolgt.

**12.** Verfahren nach Anspruch 10, **dadurch gekennzeichnet, dass** die Stäube und sonstigen feinkörnigen Stoffe nach den Merkmalen 10c) und 10d) stückig gemacht werden und in stückiger Form der Schmelze oder Schlacke zugeführt werden.

**13.** Verfahren nach Anspruch 10, **dadurch gekennzeichnet, dass** die Zufuhr von Schlackenbildner nach Merkmal 10e) alternativ von oben in die Schmelze erfolgt

**14.** Verfahren nach Anspruch 10, **dadurch gekennzeichnet, dass** die Zufuhr von Legierungsstoffen nach Merkmal 10f) alternativ von oben in die Schmelze erfolgt.

**15.** Verfahren nach einem der vorhergenden Ansprüche, **dadurch gekennzeichnet, dass** das Unterbadblasen im zweiten Verfahrensschritt mindestens eine der folgenden Maßnahmen umfasst:

a) das Unterbadblasen zur CO-Bildung, Wärmeübertragung bei der Nachverbrennung, Energieeinleitung und Badbewegung und Mischung von Schmelze und Schlacke

o mit $O_2$ oder einem Gemisch aus $O_2$ und einem Inertgas, wie vorzugsweise $N_2$, oder
o mit $O_2$ und einem Gemisch aus $O_2$ und einem Inertgas in aufeinanderfolgenden Schritten und Mischungsverhältnissen, oder
o mit einem Gemisch aus $O_2$ und Wasserdampf, oder
o mit einem Gemisch aus $O_2$ und $CO_2$;

b) die Zufuhr eines flüssigen oder gasförmigen Energieträgers und eines flüssigen oder gasförmigen Reduktionsmittels durch Unterbaddüsen
c) das Unterbadblasen wie im ersten Verfahrensschritt durchgeführt wird.

**16.** Verfahren nach einem der vorhergehenden Ansprüche, **dadurch gekennzeichnet, dass** das Unterbadblasen zur CO-Bildung, Wärmeübertragung bei der Nachverbrennung, Badbewegung und Entkohlung im dritten Verfahrens-

schritt mit $O_2$ und einem Gemisch aus $O_2$ und einem Inertgas kontinuierlich oder in aufeinander folgenden Schritten mit gegebenenfalls wechselnden Mischungsverhältnissen erfolgt.

17. Verfahren nach Anspruch 16, **dadurch gekennzeichnet, dass** das Mischungsverhältnis von $O_2$ und einem Inertgas in Abhängigkeit vom C-Gehalt der Schmelze eingestellt wird.

18. Verfahren nach einem der vorhergehenden Ansprüche, **dadurch gekennzeichnet, dass** im dritten Verfahrensschritt Ni-Träger, direkt oder gemischt mit einem Reduktionsmittel, mit einem Trägergas, vorzugsweise Inertgas, durch Unterbadblasen bei einem C-Gehalt der Schmelze von mehr als 1,0 Gew.-% C in die Schmelze eingebracht werden.

19. Verfahren nach einem der Ansprüche 1 bis 18, **dadurch gekennzeichnet, dass** Ni-Träger in stückiger Form auf das Metallbad chargiert wird.

20. Verfahren nach einem der vorhergehenden Ansprüche, **dadurch gekennzeichnet, dass** bei den Verfahrensschritten während des Blasevorganges die Temperatur und/oder die chemische Analyse der Schmelze, vorzugsweise durch eine Online-Auswertung der von der Schmelze abgestahlten elektromagnetischen Wellen, welche durch eine Unterbaddüse zu einer Auswerteeinrichtung gelangen, bestimmt werden und in Abhängigkeit von der Temperatur und/oder der chemischen Analyse Vorgabewerte für das Auf- und Unterbadblasen und für die Zugabe von Legierungsmitteln, Energieträger, Auf- und Entkohlungsmitteln, in einem Prozessmodell bestimmt werden.

21. Verfahren nach einem der vorhergehenden Ansprüche, **dadurch gekennzeichnet, dass** in allen Verfahrensschritten durch die Unterbaddüsen Kohlenwasserstoffe, wie $CH_4$, $C_3H_8$, $C_4H_{10}$, deren Gemische, Dieselöl, Schweröl, als Düsenschutz in die Schmelze eingeblasen werden.

22. Verfahren nach Anspruch 21, **dadurch gekennzeichnet, dass** zusätzlich zu den Kohlenwasserstoffen oder an deren Stelle Inertgase, Dampf, $CO_2$, CO oder deren Mischungen als Düsenschutz in die Schmelze eingeblasen werden.

23. Verfahren nach einem der vorhergehenden Ansprüche, **dadurch gekennzeichnet, dass** die Basisschmelze von entphosphortem Roheisen gebildet wird und welche mit einer Badtemperatur von 1220 bis 1650°C zumindest im ersten Verfahrensschritt eingebracht wird und folgende Zusammensetzung aufweist:

2,0 - 4,7 Gew.-% C,
< 1,0 Gew.-% Mn,
< 0,025 Gew.-% P,
< 0,05 Gew.-% S,

gegebenenfalls wechselnde Anteile an Cr und Ni,
Rest Fe und verfahrensbedingte Verunreinigungen.

24. Verfahren nach einem der vorhergehenden Ansprüche, **dadurch gekennzeichnet, dass** die Basisschmelze unter Einwirkung elektrischer Energie erzeugt und gegebenenfalls im ersten oder zweiten Verfahrensschritt weiter aufgekohlt wird.

25. Verfahren nach einem der Ansprüche 1 bis 23, **dadurch gekennzeichnet, dass** die Basisschmelze aus Abfallstoffen der Ferronickel-Produktion durch Schmelzreduktion gebildet wird.

26. Verfahren nach einem der Ansprüche 1 bis 23, **dadurch gekennzeichnet, dass** eine Basisschmelze anteilig aus entphosphortem Roheisen und bis zu 50 % aus Abfallstoffen der Ferronickel-Produktion gebildet wird.

27. Verfahren nach einem der vorhergehenden Ansprüche, **dadurch gekennzeichnet, dass** kalte oder flüssige oder heiße $Cr_2O_3$-hältige unreduzierte Schlacke aus dem dritten Verfahrensschritt bevorzugt in den ersten oder auch zweiten Verfahrensschritt rückgeführt wird und dort mit einem C-hältigem Reduktionsmittel reduziert wird.

28. Verfahren nach einem der vorhergehenden Ansprüche, **dadurch gekennzeichnet, dass** in den letzten Blaseminuten des zweiten Verfahrensschrittes HCFeCr mit 2,0 bis %,0 Gew.-% Si zum Reduzieren und teilweise Konditionieren der Schlacke und zum Legieren der Schmelze sowie energetischen Entlastung des dritten Verfahrensschrittes zugegeben wird.

**29.** Verfahren nach einem der vorhergehenden Ansprüche, **dadurch gekennzeichnet, dass** in den letzten Blaseminuten des ersten und/oder zweiten Verfahrensschrittes die Schlackenbasizität (CaO/SiO$_2$) von 2,0 bis 2,5 auf etwa 1,4 durch Zugabe von SiO$_2$-Träger erniedrigt wird, sowie die Schlackenanalyse von Eisenoxid- und Al$_2$O$_3$-Träger auf Werte eingestellt werden, wie sie die Zementindustrie für Schlacken fordert, die als Klinkerersatz oder als Zumahlstoff bei der Zementerzeugung verwendet werden.

**30.** Verfahren nach einem der vorhergehenden Ansprüche, **dadurch gekennzeichnet, dass** die Schlacken des ersten und/oder zweiten Verfahrensschrittes nach dem Ausleeren der Metallschmelze auf die gewünschte Analyse und Temperatur konditioniert werden.

**31.** Verfahren nach einem der vorhergehenden Ansprüche, **dadurch gekennzeichnet, dass** im Anschluss an den dritten Verfahrensschritt die legierte Schmelze einer pfannenmetallurgische Behandlung, vorzugsweise nach dem VOD-Verfahren, unterzogen wird, die eine oder mehrere der Maßnahmen Feinentkohlung, Feinlegierung, Entstikkung, Reduktion, Entschwefelung, sowie eine Temperatureinstellung und eine Spühlbehandlung der Schmelze umfasst.

**32.** Verfahren nach einem der vorhergehenden Ansprüche, **dadurch gekennzeichnet, dass** die Mengen der in den einzelnen Verfahrensschritten eingebrachten Einsatzstoffe, insbesondere Cr-Erz und sonstige oxidische, hydroxidische oder eisenhältige Legierungsmittelträger, sowie Basisschmelze und gegebenenfalls Schrott, so bestimmt werden, dass in den einzelnen Verfahrensschritten Abstichfolgezeiten erreicht werden, die der erforderlichen Taktzeit für das aufeinander folgende Stranggießen der Chargen oder anderer Taktzeiten für das Gießen der Metallschmelze entsprechen.

**33.** Verfahren nach Anspruch 32, **dadurch gekennzeichnet, dass** ein das Stahlherstellungsverfahren steuerndes Prozessmodell Leitgrößen eines nachgeordneten Gießprozesses, wie die Gießgeschwindigkeit und das Gießformat, oder Taktzeiten beim Gießen von Ferrolegierungen, zur Festlegung der Mengen der in den einzelnen Verfahrensstufen eingebrachten Einsatzstoffe einbezieht.

**Claims**

**1.** Method for producing an alloyed molten metal on an iron basis, which preferably contains Cr or Ni and Cr, in a number of successive and synchronized method steps,
**characterized in that**

• in a first method step, alloying agent carriers are introduced into a base melt and, by adding a reducing agent, recirculated slag and/or slag forming agents and an energy carrier, the alloying agent carriers are melted and reduced to a great extent by the action of an over- and under-bath blowing process using an oxygen carrier, and a first pre-alloyed melt is produced,
• in a second method step, an alloying agent carrier, preferably a Cr carrier, and if appropriate a base melt, are introduced into the first pre-alloyed melt and, by adding a reducing agent, a slag forming agent and a fossil energy carrier, the alloying agent carrier, preferably the Cr carrier, is melted and reduced to a great extent by the action of an over- and under-bath blowing process using an oxygen carrier, and a second pre-alloyed melt is produced,
• in a third method step, alloying agents, in particular ferroalloys, and if appropriate a base melt, are added to the second pre-alloyed melt, that slag forming agents are added, and a decarburization process is carried out by the action of an over- and under-bath blowing process using an oxygen carrier, and an alloyed melt with a predefined chemical analysis and temperature is set.

**2.** Method according to claim 1, **characterized in that** scrap, in particular steel scrap alloyed with Cr, or Cr and and Ni, and if appropriate other metal carriers, are added in predetermined amounts in one or more of the method steps.

**3.** Method according to claim 1 or 2, **characterized in that** a CO + H$_2$ post-combustion takes place at least in the first and second method steps, by top blowing of oxygen or an O$_2$-containing gas, preferably with hot air.

**4.** Method according to one of the preceding claims, **characterized in that** a CO + H$_2$ post-combustion with oxygen takes place in the third method step.

5.   Method according to one of the preceding claims, **characterized in that** the second pre-alloyed melt, produced in the second method step, is divided into at least two partial amounts and each partial amount is supplemented with a base melt in each case in a third method step, **in that** alloying agents which contain Cr or Cr and Ni are added, **in that** slag forming agents are added and a decarburization process is carried out by the action of an over- and under-bath process using an oxygen carrier, and an alloyed melt with a predetermined chemical analysis and temperature is set.

6.   Method according to one of the preceding claims, **characterized in that**, with increasing Cr contents, the C content of the melt is increased up to a maximum C content of 8% by weight in the first and second method steps.

7.   Method according to one of the preceding claims, **characterized in that** the top blowing with an oxygen carrier takes place in the first and second method steps with oxygen or nitrogen and oxygen or hot air or a hot air enriched with oxygen and in the third method step with oxygen or a mixture of oxygen and inert gas.

8.   Method according to one of the preceding claims, **characterized in that**, in the production of molten metal with a high Cr content or Ni content or Mn content (ferroalloys), top blowing with an oxygen carrier is at least partially performed with hot air in the third method step.

9.   Method according to one of the preceding claims, **characterized in that** the top blowing in the first and/or second method step is carried out with pulsating $O_2$, with $O_2$ and inert gas or hot air or with hot air enriched with $O_2$.

10.  Method according to one of the preceding claims, **characterized in that** the under-bath blowing in the first method step, and if appropriate in the second method step, comprises one or more of the following measures:

   a) an under-bath blowing for CO formation, heat transfer in the post-combustion, energy introduction and bath agitation, mixing of melt and slag, and if appropriate the cutting up of scrap and metal carriers, with

   • $O_2$ or a mixture of $O_2$ and an inert gas, such as preferably $N_2$, or
   • $O_2$ and a mixture of $O_2$ and an inert gas in successive steps or
   • a mixture of oxygen and water vapor or
   • a mixture of oxygen and $CO_2$;

   b) the supply of an energy carrier and a reducing agent through under-bath nozzles;
   c) the blowing in of dusts, such as recycled metallurgical materials, converter and electric furnace dusts, dusts from the production of ferroalloys, ash, fine-grained ferroalloys or Al ;
   d) the blowing in of Fe-, Cr- and Ni-containing dusts for disposal and as alloying agent carriers;
   e) the blowing in of slag forming agents, such as lime, $SiO_2$, fluorospar, bauxite, sand, respectively with oxygen as the carrier gas, as long as the Cr contents of the melt lie approximately below 10% by weight, or with inert gas;
   f) the blowing in of at least one of the materials Cr ore, Mn ore, Ni ore, Ni oxides, nickel hydroxide, dusts, ashes, cinder, grinding dusts, sand, contaminated construction rubble, domestic or industrial waste or shredder remains, waste materials as alloying agent carriers and/or slag forming agents.

11.  Method according to claim 10, **characterized in that** the supply of an energy carrier and a reducing agent according to feature 10b) additionally or alternatively take place into the melt from above in lump form.

12.  Method according to claim 10, **characterized in that** the dusts and other fine-grained materials according to features 10c) and 10d) are made into lump form and supplied to the melt or slag in lump form.

13.  Method according to claim 10, **characterized in that** the supply of slag forming agent according to feature 10e) alternatively takes place into the melt from above.

14.  Method according to claim 10, **characterized in that** the supply of alloying materials according to feature 10f) alternatively takes place into the melt from above.

15.  Method according to one of the preceding claims, **characterized in that** the under-bath blowing in the second method step comprises at least one of the following measures:

   a) the under-bath blowing for CO formation, heat transfer in the post-combustion, energy introduction and bath agitation and mixing of melt and slag,

- with $O_2$ or a mixture of $O_2$ and an inert gas, such as preferably $N_2$, or
- with $O_2$ and a mixture of $O_2$ and an inert gas in successive steps and mixing ratios, or
- with a mixture of $O_2$ and water vapor, or
- with a mixture of $O_2$ and $CO_2$;

b) the supply of a liquid or gaseous energy carrier and a liquid or gaseous reducing agent through under-bath nozzles;

c) the under-bath blowing is carried out as in the first method step.

16. Method according to one of the preceding claims, **characterized in that**, in the third method step, the under-bath blowing for the CO formation, heat transfer in the post-combustion, energy introduction, bath agitation and decarburization takes place with $O_2$ and a mixture of $O_2$ and an inert gas continuously or in successive steps, if appropriate with changing mixing ratios.

17. Method according to claim 16, **characterized in that** the mixing ratio of $O_2$ and an inert gas is set in dependence on the C content of the melt.

18. Method according to one of the preceding claims, **characterized in that**, in the third method step, Ni carriers are introduced into the melt directly or mixed with a reducing agent, with a carrier gas, preferably inert gas, by under-bath blowing with a C content of the melt of more than 1.0% by weight of C.

19. Method according to one of claims 1 to 18, **characterized in that** Ni carriers are charged to the metal bath in lump form.

20. Method according to one of the preceding claims, **characterized in that** the temperature and/or the chemical analysis of the melt are determined during the blowing operation in the method steps, preferably by an online evaluation of the electromagnetic waves emitted by the melt, which reach an evaluation device through a under-bath nozzle, and set points for the over- and under-bath blowing process and for the addition of alloying agents, energy carriers, carburizing and decarburizing agents, etc., are determined in a process model in dependence on the temperature and/or the chemical analysis.

21. Method according to one of the preceding claims, **characterized in that**, in all the method steps, hydrocarbons, such as $CH_4$, $C_3H_8$, $C_4H_{10}$, their mixtures, diesel oil or heavy oil, etc., are blown into the melt as nozzle protection.

22. Method according to claim 21, **characterized in that**, in addition to the hydrocarbons or in place of them, inert gases, steam, $CO_2$, CO or their mixtures are blown into the melt as nozzle protection.

23. Method according to one of the preceding claims, **characterized in that** the base melt is formed by dephosphorized pig iron and is introduced at least in the first method step with a bath temperature of from 1220 to 1650°C and has the following composition:

2.0 - 4.7% by weight of C,
< 1.0% by weight of Mn,
< 0.025% by weight of P,
< 0.05% by weight of S,

if appropriate, changing proportions of Cr and Ni,
the remainder Fe and process-related impurities.

24. Method according to one of the preceding claims, **characterized in that** the base melt is produced by the action of electrical energy, and if appropriate is further carburized in the first or second method step.

25. Method according to one of claims 1 to 23, **characterized in that** the base melt is formed from waste materials of the ferronickel production by smelt reduction.

26. Method according to one of claims 1 to 23, **characterized in that** the base metal is formed proportionally from dephosphorized pig iron and up to 50% from waste materials of ferronickel production.

27. Method according to one of the preceding claims, **characterized in that** cold or liquid or hot $Cr_2O_3$-containing unreduced slag from the third method step is preferably returned into the first or second method step, where it is reduced with a C-containing reducing agent.

28. Method according to one of the preceding claims, **characterized in that** HCFeCr with 2.0 to %.0% by weight of Si is added in the final blowing minutes of the second method step to reduce and partially condition the slag and to alloy the melt and also provide energy relief for the third method step.

29. Method according to one of the preceding claims, **characterized in that** the slag basicity ($CaO/SiO_2$) is reduced from 2.0 to 2.5 to approximately 1.4 in the final blowing minutes of the first and/or second method step, by adding a $SiO_2$ carrier, and the slag analysis of iron oxide and $Al_2O_3$ carriers is set to values such as those which the cement industry requires for slags that are used as a clinker substitute or as a ground substance additionally included in cement production.

30. Method according to one of the preceding claims, **characterized in that** the slags of the first and/or second method step are conditioned to the desired analysis and temperature after emptying of the molten metal.

31. Method according to one of the preceding claims, **characterized in that**, following the third method step, the alloyed melt is subjected to a metallurgical ladle treatment, preferably based on the VOD method, which comprises one or more of the measures of fine decarburization, fine alloying, denitriding, reduction, desulfurization, as well as a temperature setting and a scavenging treatment of the melt.

32. Method according to one of the preceding claims, **characterized in that** the amounts of charge materials introduced in the individual method steps, in particular Cr ore and other oxidic, hydroxidic or iron-containing alloying agent carriers, as well as the base melt and if appropriate scrap, are determined in such a way that tap-to-tap times which correspond to the required cycle time for the successive continuous casting of the batches or other cycle times for the casting of the molten metal are achieved in the individual method steps.

33. Method according to claim 32, **characterized in that** a process model controlling the steel production process includes reference values of a downstream casting process, such as the casting rate and the casting formats, or cycle times in the casting of ferroalloys, to establish the amounts of charge materials that are introduced in the individual method stages.

**Revendications**

1. Procédé en vue de la fabrication d'une masse en fusion métallique alliée à base de fer, qui contient, de préférence, du Cr ou du Cr et du Ni, en plusieurs étapes de procédé se suivant les unes les autres et adaptées les unes aux autres, **caractérisé**

   • **en ce que**, dans une première étape de procédé, l'on introduit, dans une masse en fusion de base, des vecteurs d'alliage et en ce que l'on procède, avec un apport supplémentaire d'un agent de réduction, d'un laitier re-circulé et/ou d'un formateur de laitier et d'un vecteur d'énergie, sous l'action d'un soufflage sur bain et d'un soufflage sous bain avec un vecteur d'oxygène, à la fusion des vecteurs d'alliage et en ce que l'on procède, dans une large mesure, à leur réduction et en ce que l'on produit une première masse en fusion pré-alliée,
   • **en ce que**, dans une deuxième étape de procédé, dans la première masse en fusion pré-alliée, l'on procède à l'introduction d'un vecteur d'alliage, de préférence, d'un vecteur de Cr et, le cas échéant, d'une masse en fusion de base et en ce que l'on procède, avec un apport supplémentaire d'un agent de réduction, d'un formateur de laitier et d'un vecteur d'énergie fossile, sous l'action d'un soufflage sur bain et d'un soufflage sous bain avec un vecteur d'oxygène, à la fusion du vecteur d'alliage, de préférence, du vecteur de Cr et en ce que l'on procède, dans une large mesure, à leur réduction et en ce que l'on produit une deuxième masse pré-alliée,
   • **en ce que**, dans une troisième étape de procédé, l'on ajoute à la deuxième masse en fusion pré-alliée, un milieu d'alliage, en particulier des ferro-alliages et, le cas échéant, une masse en fusion de base, en ce que l'on ajoute un formateur de laitier et en ce que l'on effectue, sous l'action d'un soufflage sur bain et d'un soufflage sous bain, à l'aide d'un vecteur d'oxygène, un processus de décarburation et en ce que l'on ajuste une masse en fusion alliée, ayant une analyse chimique et une température prédéterminées.

2. Procédé selon la revendication 1, **caractérisé en ce que**, dans une ou plusieurs des étapes de procédé, de la ferraille, en particulier de la ferraille d'acier alliée au Cr ou au Cr et au Ni et, le cas échéant, d'autres vecteurs métalliques sont ajoutés dans une quantité prédéterminée.

3. Procédé selon la revendication 1 ou 2, **caractérisé en ce qu'**au moins dans la première et la deuxième étapes de procédé, a lieu une post-combustion CO + H$_2$ par soufflage d'oxygène ou d'un gaz contenant de l'oxygène, de préférence, à l'aide de vent chaud.

4. Procédé selon l'une quelconque des revendications précédentes, **caractérisé en ce que**, dans la troisième étape de procédé, a lieu une post-combustion CO + H$_2$ à l'aide d'oxygène.

5. Procédé selon l'une quelconque des revendications précédentes, **caractérisé en ce que** la deuxième masse en fusion pré-alliée, produite dans la deuxième étape de procédé, est subdivisée en au moins deux quantités partielles et **en ce que** chaque quantité partielle est complétée dans, à chaque fois, une troisième étape de procédé, à l'aide d'une masse en fusion de base, **en ce que** l'on ajoute des matériaux d'alliage, qui contiennent Cr ou Cr et Ni, **en ce que** l'on ajoute des formateurs de laitier et en ce l'on procède, sous l'action d'un soufflage sur bain et d'un soufflage sous bain, à l'aide d'un vecteur d'oxygène, à un processus de décarburation et **en ce que** l'on ajuste une masse en fusion alliée ayant une analyse chimique et une température prédéterminées.

6. Procédé selon l'une quelconque des revendications précédentes, **caractérisé en ce que** le teneur en C de la masse en fusion allant jusqu'à une teneur en C d'au maximum 8 % en poids est augmentée dans la première et la deuxième étape de procédé grâce à des teneurs en Cr croissantes.

7. Procédé selon l'une quelconque des revendications précédentes, **caractérisé en ce que** le soufflage à l'aide d'un vecteur d'oxygène dans la première et la deuxième étape de procédé se fait à l'aide d'oxygène ou à l'aide d'oxygène et d'azote ou à l'aide d'un vent chaud ou à l'aide d'un vent chaud enrichi en oxygène et, dans la troisième étape de procédé, à l'aide d'oxygène ou à l'aide d'un mélange d'oxygène et d'un gaz inerte.

8. Procédé selon l'une quelconque des revendications précédentes, **caractérisé en ce que** le soufflage à l'aide d'un vecteur d'oxygène dans la troisième étape de procédé lors de la production d'une masse en fusion métallique ayant une teneur élevée en Cr ou en Ni ou en Mn (ferro-alliages) est soumis à soufflage au moins partiellement à l'aide de vent chaud.

9. Procédé selon l'une quelconque des revendications précédentes, **caractérisé en ce que** le soufflage dans la première et/ou la deuxième étape de procédé est effectué à l'aide d'O$_2$, sous forme de pulsations ou à l'aide d'O$_2$ et de gaz inerte ou à l'aide de vent chaud ou à l'aide de vent chaud enrichi en O$_2$.

10. Procédé selon l'une quelconque des revendications précédentes, **caractérisé en ce que** le soufflage sous bain dans la première étape de procédé et, le cas échéant, dans la deuxième étape de procédé, comprend une ou plusieurs des mesures a) à f) suivantes:

   a) un soufflage sous bain en vue de la formation de CO, du transfert thermique lors de la post-combustion, de l'introduction d'énergie et de la mise en mouvement du bain, du mélange de la masse en fusion et du laitier, ainsi que, le cas échéant, de la découpe de ferrailles et de vecteurs métalliques à l'aide

   • d'O$_2$ ou d'un mélange de O$_2$ et d'un gaz inerte, comme, de préférence, N$_2$ ou
   • de O$_2$ et d'un mélange de O$_2$ et d'un gaz inerte dans des étapes se suivant les unes les autres ou
   • d'un mélange d'oxygène et de vapeur d'eau ou
   • d'un mélange d'oxygène et de CO$_2$

   b) l'apport d'un vecteur d'énergie et d'un agent de réduction par l'intermédiaire de buses de sous-bain;
   c) l'insufflation de poussières, comme des matériaux de circulation de fonderie, des poussières de convertisseurs et de fours électriques, des poussières provenant de la production de ferro-alliages, de cendres, de ferro-alliages à grains fins ou d'Al;
   d) l'insufflation de poussières contenant du Fe, du Cr et du Ni en vue de la mise au rebut et en tant que vecteur d'alliage;
   e) l'insufflation de formateurs de laitier, comme la chaux, le SiO$_2$, le spath fluor, la bauxite, le sable, à chaque fois avec l'oxygène en tant que gaz vecteur, tant que les teneurs en Cr de la masse en fusion se situent quelque peu en dessous de 10 % en poids, ou à l'aide de gaz inerte;

f) l'insufflation, en tant que vecteurs d'alliages et/ou formateurs de laitier, d'au moins l'un des matériaux minerai de Cr, minerai de Mn, minerai de Ni, oxydes de Ni, hydroxyde de nickel, poussières, cendres, calamine, poussières de rectification, sable, rebuts de construction contaminés, déchets ménagers ou industriels ou résidus de déchiqueteurs, déchets.

**11.** Procédé selon la revendication 10, **caractérisé en ce que** l'apport d'un vecteur d'énergie et d'un agent de réduction selon la caractéristique 10b) se fait dans la masse en fusion par le haut en complément ou en remplacement sous forme de morceaux.

**12.** Procédé selon la revendication 10, **caractérisé en ce que** les poussières et les substances à grains fins quelconques selon les caractéristiques 10c) et 10d) sont formées en morceaux et sont acheminées à la masse en fusion ou au laitier sous la forme de morceaux.

**13.** Procédé selon la revendication 10, **caractérisé en ce que** l'apport de formateurs de laitier selon la revendication 10e) se fait dans la masse en fusion alternativement par le haut.

**14.** Procédé selon la revendication 10, **caractérisé en ce que** l'apport de matériaux d'alliage selon la caractéristique 10f) se fait dans la masse en fusion alternativement par le haut.

**15.** Procédé selon l'une quelconque des revendications précédentes, **caractérisé en ce que** le soufflage sous bain dans la deuxième étape de procédé comprend au moins une des mesures suivantes:

a) le soufflage sous bain en vue de la formation de CO, du transfert thermique lors de la post-combustion, de l'introduction d'énergie et de la mise en mouvement du bain et du mélange de la masse en fusion et du laitier, à l'aide

o de $O_2$ ou d'un mélange de $O_2$ et d'un gaz inerte, comme, de préférence, $N_2$ ou
o de $O_2$ et d'un mélange de $O_2$ et d'un gaz inerte dans des étapes et des rapports de mélange se suivant les uns les autres ou
o d'un mélange de $O_2$ et de vapeur d'eau ou
o d'un mélange de $O_2$ et de $CO_2$;

b) l'apport d'un vecteur d'énergie liquide ou gazeux et d'un agent de réduction liquide ou gazeux par l'intermédiaire de buses de sous bain
c) le soufflage sous bain, comme effectué dans la première étape de procédé.

**16.** Procédé selon l'une quelconque des revendications précédentes, **caractérisé en ce que** le soufflage sous bain en vue de la formation de CO, du transfert thermique lors de la post-combustion, la mise en mouvement du bain et la décarburation dans la troisième étape de procédé se fait à l'aide de $O_2$ et d'un mélange de $O_2$ et d'un gaz inerte, en mode continu ou lors d'étapes se suivant les unes les autres avec, le cas échéant, des rapports de mélange différents.

**17.** Procédé selon la revendication 16, **caractérisé en ce que** le rapport de mélange de $O_2$ et d'un gaz inerte est ajusté en fonction de la teneur en C de la masse en fusion.

**18.** Procédé selon l'une quelconque des revendications précédentes, **caractérisé en ce que**, dans la troisième étape de procédé, l'on introduit dans la masse en fusion, pour une teneur en C de la masse en fusion de plus de 1,0 % en poids, un vecteur de Ni, directement ou mélangé à un agent de réduction, à l'aide d'un gaz vecteur, de préférence, un gaz inerte, par soufflage sous bain.

**19.** Procédé selon l'une quelconque des revendications 1 à 18, **caractérisé en ce que** le vecteur de Ni est chargé sur le bain métallique sous la forme de morceaux.

**20.** Procédé selon l'une quelconque des revendications précédentes, **caractérisé en ce que**, lors des étapes de procédé pendant la procédure de soufflage, la température et/ou l'analyse chimique de la masse en fusion est ou sont déterminée(s), de préférence, par une évaluation en ligne des ondes électromagnétiques émises par la masse en fusion, qui parviennent, par l'intermédiaire d'une buse de sous-bain, à un équipement d'évaluation et **en ce que**, en fonction de la température et/ou de l'analyse chimique, des valeurs prédéfinies pour le soufflage sur bain et le soufflage sous bain et pour l'addition de milieux d'alliage, de vecteurs d'énergie, d'agents de carburation et de décarburation sont déterminées dans un modèle de processus.

21. Procédé selon l'une quelconque des revendications précédentes, **caractérisé en ce que**, dans toutes les étapes de procédé, l'on insuffle, dans la masse en fusion, en tant que protection des buses, à l'aide des buses de sous-bain, des hydrocarbures, comme le $CH_4$, le $C_3H_8$, le $C_4H_{10}$, leurs mélanges, du mazout, de l'huile lourde.

22. Procédé selon la revendication 21, **caractérisé en ce que**, en plus des hydrocarbures ou à leur place, l'on insuffle, dans la masse en fusion, en tant que protection des buses, des gaz inertes, de la vapeur, du $CO_2$, du CO ou leurs mélanges.

23. Procédé selon l'une quelconque des revendications précédentes, **caractérisé en ce que** la masse en fusion de base est formée de fer brut déphosphoré et qui est introduit, tout au moins dans la première étape, à une température de bain de 1220 à 1650°C et qui présente la composition suivante:

   2,0 - 4,7 % en poids de C,
   < 1,0 % en poids de Mn,
   < 0,025 % en poids de P,
   <0,05 % en poids de S,

   le cas échéant, des proportions variables de Cr et de Ni,
   le restant étant du Fe et des impuretés conditionnées par le procédé.

24. Procédé selon l'une quelconque des revendications précédentes, **caractérisé en ce que** la masse en fusion de base est produite sous l'effet d'énergie électrique et est encore carburée, le cas échéant, dans la première ou la deuxième étape de procédé.

25. Procédé selon l'une quelconque des revendications 1 à 23, **caractérisé en ce que** la masse en fusion de base est formée par réduction à l'état fondu à partir de déchets provenant de la production du ferro-nickel.

26. Procédé selon l'une quelconque des revendications 1 à 23, **caractérisé en ce qu'**une masse en fusion de base est formée en partie à partir de fer brut déphosphoré et, pour jusqu'à 50 %, à partir de déchets provenant de la production de ferro-nickel.

27. Procédé selon l'une quelconque des revendications précédentes, **caractérisé en ce que** du laitier non réduit, contenant du $Cr_2O_3$, chaud ou froid ou liquide provenant de la troisième étape de procédé est reconduit, de préférence, dans la première ou également la deuxième étape de procédé et y est réduit à l'aide d'un agent de réduction contenant du C.

28. Procédé selon l'une quelconque des revendications précédentes, **caractérisé en ce que**, dans les dernières minutes de soufflage de la deuxième étape de procédé, l'on ajoute du HCFeCr ayant de 2,0 à %, 0% en poids de Si en vue de la réduction et du conditionnement partiel du laitier et en vue de l'alliage de la masse en fusion ainsi qu'en vue de la décharge énergétique de la troisième étape de procédé.

29. Procédé selon l'une quelconque des revendications précédentes, **caractérisé en ce que**, dans les dernières minutes de soufflage de la première et/ou de la deuxième étape de procédé, la basicité du laitier ($CaO/SiO_2$) est abaissée de 2,0 à 2,5 à environ 1,4 par addition d'un vecteur de $SiO_2$ tout comme **en ce que** l'analyse du laitier des vecteurs oxyde de fer et de $Al_2O_3$ est ajustée à des valeurs telles qu'elles sont exigées par l'industrie du ciment pour des laitiers qui sont utilisés, lors de la production du ciment, en tant que remplacement du clinker ou en tant qu'additif de mouture.

30. Procédé selon l'une quelconque des revendications précédentes, **caractérisé en ce que** les laitiers de la première et/ou de la deuxième étape de procédé sont conditionnés à l'analyse et à la température souhaitées après le déversement de la masse en fusion métallique.

31. Procédé selon l'une quelconque des revendications précédentes, **caractérisé en ce que**, à la suite de la troisième étape de procédé, la masse en fusion alliée est soumise à un traitement métallurgique en poche, de préférence, conformément au procédé VOD, qui comprend une ou plusieurs des mesures de décarburation fine, alliage fin, dénitruration ainsi qu'un réglage en température et un traitement de purge de la masse en fusion.

32. Procédé selon l'une quelconque des revendications précédentes, **caractérisé en ce que** les quantités des matériaux de charge introduits dans les étapes de procédé individuelles, en particulier le minerai de Cr et autres vecteurs d'alliage oxydés, hydro-oxydés ou contenant du fer, ainsi que les masses en fusion de base et, le cas échéant, la ferraille sont déterminées de telle sorte que, dans les étapes de procédé individuelles, l'on obtienne des intervalles de piquée qui correspondent à la cadence de production nécessaire à la coulée continue séquentielle des charges ou à d'autres cadences de production pour la coulée de la masse en fusion métallique.

33. Procédé selon la revendication 32, **caractérisé en ce qu'**un modèle de processus commandant le procédé de fabrication d'acier prend en compte les grandeurs de commande d'un processus de coulée intercalé à la suite, comme la vitesse de coulée et le format de coulée ou des cadences de production lors de la coulée de ferro-alliages, en vue de la détermination des quantités de matériaux de charge introduits dans les étapes de procédé individuelles.

Fig. 1

EP 1 641 946 B1

Abgas + Staub

Heißwind (1200 °C)
oder $O_2$

Erz

Kalk

Schlacke etc.

Basisschmelze
Schrott

Legierte Vorschmelze für
2. Verfahrensschritt

Mit [C] reduzierte Schlacke
< 1% $(Cr_2O_3)$

Kohle + $N_2$/C-H

Feinstaub + $N_2$/C-H

$O_2$ $(N_2)$ oder $O_2$ + Kalk/Kohlenwasserstoff

VAI-CON® Temp and Chem für on-line Prozesskontrolle

## 2. Verfahrensschritt:

**Fig. 2**

## 3.Verfahrensschritt:

Legierte Vorschmelze vom 2. Verfahrensschritt
Basisschmelze

Ni-Oxyd/Hydroxyd Briketts + Ni

Legierte Vorschmelze/Schmelze für
VOD oder nur Trimmstation→Strangguß

Unreduzierte Schlacke für 1. Verfahrensschritt
(oder reduziert ohne Rezirkulierung)

Abgas + Staub

O₂

HCFeCr

Kalk, Dolomit

Düsenschutz
Kohlenwasserstoff (+Inertgas)

VAI-CON® Temp und Chem
On-line Prozesskontrolle

O₂+ Inertgas
oder (Ni Hydroxide + N₂)
O₂+ Inertgas

Fig. 3

29

**3. Verfahrensschritt:**
19,6 t HCFeCr
9,18 t Ni
6,4 t NH (40% Ni)*)
2 t FeMn
3,9 t Kalk
1,5 t Dolo
8800 Nm³ O₂

2 x 168,6 t:
C: 0,17% C
Si: 0%
Mn: 0,8%
Cr: 18,14%
Ni: 8,06%
T: 1680 °C

VOD: 2 x
0,34 t Ni
1,5 t FeSi
2,4 t Lime
0,5 t CaF₂
0,3 t LCMn
0,6 t FeCrLC
1100 Nm³ O₂

K-OBM-S

VOD Plant

*) NH...Nickelhydroxid

51,6 t

89 t

**2. Verfahrensschritt:**
84,6 t Anthrazit
79,6 t Cr-Erz
19 t Grobstaub
2,2 t Al₂O₃
9 t Kalk
68,700 Nm³ O₂

89 t Vorschmelze:
C: 5,7%
Mn: 0,05%
Cr: 25,9%
Ni: 1,38%
T: 1500 °C

89 t Vorschmelze:
C: 5,7%
Mn: 0,05%
Cr: 25,9%
Ni: 1,38%
T: 1500 °C

KMS-S

2 x 160 t 304:
C: 0,035%
Si: 0,5%
Mn: 1,0%
Cr: 18,25%
Ni: 8,2%
T: 1515 °C

20 t

120 t

2x160 t
Austenitischer
Cr-Stahl (304)

**1. Verfahrensschritt:**
21 t Schrott 304
24 t K-OBM-S Schlacke
33,4 t Cr-Erz
38 t Feinstaub
31,1 t Anthrazit
19,280 Nm³ O₂
145,000 Nm³ Heißwind

Recycling Konverter

120 t Vorschmelze:
C: 5%
Cr: 20,3%
Ni: 2%
T: 1560 °C

64,6 t

Roheisen:
C: 4,0%
Cr: 0,1%
Ni: 0,1%
T: 1250 °C

Roheisenmischer

Brammenstrangguß-Anlage

# Fig. 4

**Fig. 5**